# EUROPEAN PATENT APPLICATION

(11) **EP 4 765 848 A1**
(43) Date of publication of application: **24.06.2026**
(21) Application number: 24905551.8
(22) Date of filing: 05.08.2024
(51) Int. Cl.: H04N 23/951, G06F 3/14

(54) **IMAGE PROCESSING METHOD AND ELECTRONIC DEVICE**

(30) Priority: 21.12.2023 CN 202311780834
(71) Applicant: Honor Device Co., Ltd., Shenzhen, Guangdong 518040 (CN)
(72) Inventor: HU, Wenjie, Shenzhen, Guangdong 518040 (CN); CAI, Huiyue, Shenzhen, Guangdong 518040 (CN)
(74) Representative: Isarpatent
(86) International application number: PCT/CN2024/109767
(87) International publication number: WO 2025/130055

(57) **Abstract**

The embodiments of this application provide an image processing method and an electronic device, relating to the technical field of image processing. The method can effectively reduce a delay of displaying corresponding response content on a display after a user enters an operation, thereby improving the hand following performance. The method includes: receiving, after a first Vsync signal is generated, a first rendering instruction delivered by a first application; obtaining a first rendering result based on the first rendering instruction; performing synthesis processing based on the first rendering result, to obtain a first presentation image, the first presentation image being corresponding to an N^{th} frame of image; and controlling, after a second Vsync signal is generated, a display to display the N^{th} frame of image based on the first presentation image, where the second Vsync signal is generated after the first Vsync signal; and after the first rendering result is obtained and before the synthesis processing is performed based on the first rendering result, no generated Vsync signals exist.

## Description

This application claims priority to Chinese Patent Application No. 202311780834.4, filed with the China National Intellectual Property Administration on December 21, 2023 and entitled "IMAGE PROCESSING METHOD AND ELECTRONIC DEVICE", which is incorporated herein by reference in its entirety.

### TECHNICAL FIELD

The embodiments of this application relate to the technical field of image processing, and in particular, to an image processing method and an electronic device.

### BACKGROUND

Currently, before displaying an image, an electronic device may perform processing such as rendering and synthesizing on the image.

Exemplarily, after an application program delivers a rendering instruction, an electronic device may perform rendering processing based on the rendering instruction, to obtain a corresponding rendering result. The electronic device may further perform synthesis processing on the rendering result when a next synchronization signal (for example, a Vsync signal) arrives, to obtain a presentation image of the frame of image. A display of the electronic device may perform displaying based on the presentation image when the next Vsync signal arrives. Therefore, the frame of image can be displayed on the display.

In this way, there is a delay of a plurality of Vsync signal periods from the time when the application program delivers the rendering instruction to the time when the corresponding frame of image is displayed on the display. Rendering instructions delivered by some application programs may include a response to an operation that has been input by a user. In this way, the user needs to wait for a relatively long time to see a response of the input operation on a display after inputting the operation. Therefore, the problem of poor hand following performance may be caused.

### SUMMARY

This application provides an image processing method and an electronic device, to effectively reduce a delay of displaying corresponding response content on a display after a user enters an operation, thereby improving the hand following performance.

To implement the foregoing objective, the following technical solutions are used in this application.

A first aspect provides an image processing method, applied to an electronic device, where the electronic device is equipped with a display, and a first application is further installed in the electronic device. The method includes: receiving, after a first synchronization Vsync signal is generated, a first rendering instruction delivered by the first application, the first rendering instruction being used for instructing the electronic device to perform rendering processing on an N^{th} frame of image; obtaining a first rendering result based on the first rendering instruction; performing synthesis processing based on the first rendering result, to obtain a first presentation image, the first presentation image being corresponding to an N^{th} frame of image; and controlling, after a second Vsync signal is generated, a display to display the N^{th} frame of image based on the first presentation image, where the second Vsync signal is generated after the first Vsync signal; and after the first rendering result is obtained and before the synthesis processing is performed based on the first rendering result, no generated Vsync signals exist.

Based on this, after obtaining the rendering result, the electronic device can directly perform the synthesis processing based on the rendering result without waiting for a next Vsync signal to arrive. Therefore, the time consumption of at least one Vsync period is reduced. In this way, after receiving the rendering instruction delivered by the first application, the electronic device can display a corresponding interface on a display more quickly, thereby significantly improving the hand following performance.

Optionally, before the first synchronization Vsync signal is generated, the method further includes: receiving a first operation, the first operation being an operation on a first interface, and the first interface being a display interface of the first application. In this way, content instructed by the first rendering instruction to render may include response content for the first operation.

Optionally, the method further includes: generating first operation information based on the first operation, the first operation information indicating an operation type of the first operation and location information of the first operation; and sending the first operation information to the first application.

Optionally, the electronic device is configured with a first buffer queue, and the first buffer queue corresponds to the first application. After the obtaining a first rendering result based on the first rendering instruction, the method further includes: sending first information corresponding to the first rendering result to the first buffer queue. The first information includes any one of the following: image information of the first rendering result; an identifier of a buffer storing the first rendering result; and a first file identifier, the first file identifier indicating a storage location of the first rendering result in a memory of the electronic device. Therefore, a logic implementation of transferring a rendering result backward is provided. For example, the logic implementation can be performed based on a buffer queue configured in the electronic device. After the rendering result is obtained, a corresponding buffer can be enqueued in the buffer queue. Therefore, when the synthesis processing on the rendering result needs to be performed subsequently, a corresponding Buffer can be dequeued.

Optionally, after the sending first information corresponding to the first rendering result to the first buffer queue, the method further includes: configuring a first identifier field corresponding to the first buffer queue as a second value. The first identifier field is the second value indicative of that new information is enqueued in the first buffer queue.

Optionally, before the sending first information corresponding to the first rendering result to the first buffer queue, the first identifier field is configured as a first value. The first identifier field is the first value indicative of that available information in the first buffer queue is null.

This application provides a solution implementation for managing a buffer queue. For example, each buffer queue may be configured with a corresponding identifier field. Identifier fields, when being different values, correspondingly indicates whether there is an available buffer in the buffer queue, or indicates a quantity of available buffers in the buffer queue. Therefore, based on changes of different identifier field values, enqueuing of a new buffer in each buffer queue can be monitored.

Optionally, the performing synthesis processing based on the first rendering result, to obtain a first presentation image includes: obtaining the first information from the first buffer queue, and performing the synthesis processing on the first rendering result indicated by the first information, to obtain the first presentation image.

Optionally, an application white list is configured in the electronic device, an application white list is configured in the electronic device, the application white list includes at least one piece of application information, and application information of different applications is different. Before the obtaining the first information from the first buffer queue, the method further includes: determining that application information corresponding to all buffer queues whose identifier fields are the second value is included in the application white list.

Optionally, the determining that application information corresponding to all buffer queues whose identifier fields are the second value is included in the application white list includes: determining that application information corresponding to the first buffer queue is included in the application white list.

Optionally, the application information includes a package name of an application. The information of the first buffer queue includes: a package name of the first application corresponding to the first buffer queue. The determining that information corresponding to the first buffer queue is included in the application white list includes: determining that the package name of the first application corresponding to the first buffer queue is included in the application white list.

Optionally, the method further includes: determining, based on a name of the first buffer queue, the package name of the first application corresponding to the first buffer queue.

Therefore, a mechanism for triggering to perform synthesis processing in advance is provided. In this example, a white list of applications for which synthesis processing needs to be triggered in advance may be pre-configured in the electronic device. In this way, when it is determined that a new buffer is to be enqueued in a buffer queue of the applications in the white list, the buffer may be dequeued and sent for presentation in advance. Further, a rendering instruction of an application in the white list can be more quickly embodied on a display for displaying.

Optionally, a second application is further installed in the electronic device. The method further includes: receiving, after a third Vsync signal is generated, a second rendering instruction delivered by the second application, the second rendering instruction being used for instructing the electronic device to perform rendering processing on at least a part of an M^{th} frame of image; obtaining a second rendering result based on the second rendering instruction; and performing, after a fourth Vsync signal is generated, synthesis processing based on the second rendering result, to obtain a second presentation image, the second presentation image being corresponding to the M^{th} frame of image; and controlling, after a fifth Vsync signal is generated, the display to display the M^{th} frame of image based on the second presentation image, where the fourth Vsync signal is generated after the second rendering result is obtained.

Optionally, after the obtaining a second rendering result based on the second rendering instruction, the method further includes: determining that application information of the second application is not included in the application white list.

Therefore, for an application that is not in the application white list, the electronic device may not trigger an XSync solution for synthesizing in advance. Further, it is ensured that within a same Vsync period, the electronic device (for example, an SF module of the electronic device) is not triggered to perform synthesis processing multiple times.

Optionally, after the obtaining a second rendering result, the method further includes: storing second information of the second rendering result to a second buffer queue, the second buffer queue being a buffer queue corresponding to the second application.

Optionally, the method further includes: receiving, after a third Vsync signal is generated, a third rendering instruction delivered by the first application, the second rendering instruction being used for instructing the electronic device to perform rendering processing on at least a part of the Mth frame of image; obtaining a third rendering result based on the third rendering instruction; and storing third information of the third rendering result to the first buffer queue, where the third rendering result is obtained before the fourth Vsync signal is generated.

Optionally, the performing, after a fourth Vsync signal is generated, synthesis processing based on the second rendering result, to obtain a second presentation image includes: obtaining, after the fourth Vsync signal is generated, the third rendering result based on the third information of the first buffer queue; obtaining the second rendering result based on the second information of the second buffer queue; and performing the synthesis processing on the second rendering result and the third rendering result, to obtain the second presentation image.

Optionally, after the storing third information of the third rendering result to the first buffer queue, the method further includes: determining that application information corresponding to at least one buffer queue whose identifier field is the second value is not included in the application white list.

Optionally, the determining that application information corresponding to at least one buffer queue whose identifier field is the second value is not included in the application white list includes: determining that the application information corresponding to the second buffer queue is not included in the application white list.

According to a second aspect, this application further provides an electronic device. The electronic device includes: a memory and one or more processors. The memory is coupled to the processor. In some implementations, the electronic device may further be provided with a display. The memory is configured to store computer program code. The computer program code includes computer instructions. When the processor executes the computer instructions, the electronic device is caused to perform the technical solution provided in the first aspect and any one of the possible implementations thereof. In this way, the display of the electronic device can perform image displaying more quickly.

According to a third aspect, this application further provides a chip system. The chip system is applied to an electronic device. The chip system may include one or more interface circuits and one or more processors. The interface circuit and the processor are interconnected through a line. The interface circuit is configured to: receive a signal from a memory of the electronic device and send the signal to the processor, the signal including computer instructions stored in the memory. When the processor executes the computer instructions, the electronic device performs the technical solution according to the first aspect and any one of the possible implementations thereof.

According to a fourth aspect, this application further provides a computer-readable storage medium, including computer instructions. When the computer instructions are run on an electronic device, the electronic device is caused to perform the technical solution provided in the first aspect and any one of the possible implementations thereof.

According to a fifth aspect, this application further provides a computer program product. When the computer program product is run on a computer, the computer is caused to perform the technical solution provided in the first aspect and any one of the possible implementations thereof.

It is to be understood that the solutions provided in the second aspect to the fifth aspect in this application can separately correspond to the first aspect and any one of the possible design thereof, and therefore, similar beneficial effects can be achieved. Details are not described herein again.

### BRIEF DESCRIPTION OF DRAWINGS

FIG. 1 is a schematic logic diagram of interface interaction and displaying;
FIG. 2 is a schematic logic diagram of interactions of internal modules in an electronic device;
FIG. 3 is a schematic logic diagram of a process of processing a plurality of frames of images;
FIG. 4 is a schematic logic diagram of a process of processing a plurality of frames of images after a solution takes effect according to an embodiment of this application;
FIG. 5 is a schematic diagram of composition of an electronic device according to an embodiment of this application;
FIG. 6 is a schematic diagram of composition of an electronic device according to an embodiment of this application;
FIG. 7 is a schematic diagram of interactions between modules according to an embodiment of this application;
FIG. 8 is a schematic diagram of interactions between modules according to an embodiment of this application;
FIG. 9 is a schematic diagram of interactions between modules according to an embodiment of this application;
FIG. 10 is a schematic flowchart of interactions between modules according to an embodiment of this application;
FIG. 11 is a schematic logic diagram of a process of processing a plurality of frames according to an embodiment of this application;
FIG. 12 is a schematic diagram of a display effect of different frames of images according to an embodiment of this application;
FIG. 13A and FIG. 13B are a schematic flowchart of interactions between modules according to an embodiment of this application;
FIG. 14 A and FIG. 14B are a schematic flowchart of interactions between modules according to an embodiment of this application;
FIG. 15 is a schematic diagram of composition of an electronic device according to an embodiment of this application; and
FIG. 16 is a schematic diagram of composition of a chip system according to an embodiment of this application.

### DESCRIPTION OF EMBODIMENTS

The terms "first" and "second" mentioned below are merely used for a purpose of description and shall not be construed as indication or implication of relative importance or implicit indication of the quantity of indicated technical features. Therefore, a feature limited by "first" or "second" may explicitly or implicitly include one or more of the features. In descriptions of embodiments of this embodiment, unless otherwise stated, "a plurality of" means two or more.

When some application programs installed in an electronic device are run, images may be displayed by using a display of the electronic device. Exemplarily, these application programs may include game applications and the like. In this way, when a game application is run, game pictures may be displayed by using the display of the electronic device.

Exemplarily, for example, the electronic device is a mobile phone, an application 1 is installed in the electronic device, and the application 1 is a game application.

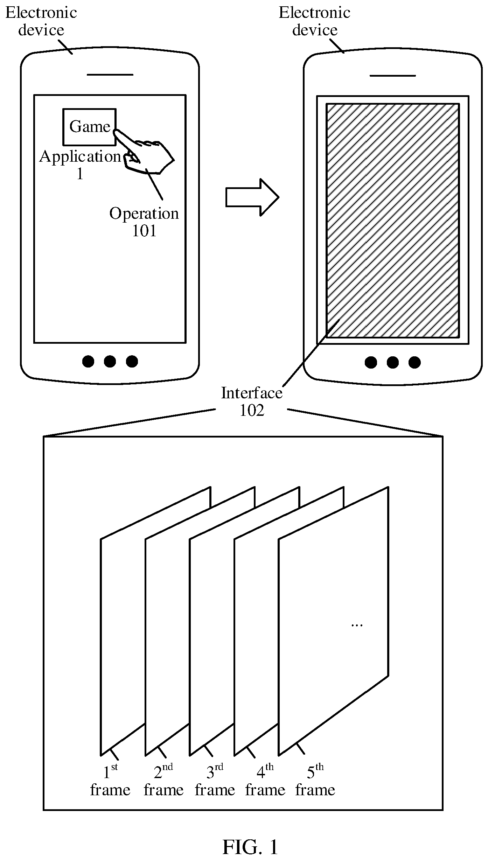

Referring to FIG. 1, an electronic device may display an icon of the application 1 on a main interface. A user may instruct, by inputting an operation 101 (for example, a click/tap operation) through an icon on the application 1, the electronic device to run the application 1.

In response to the operation 101 of the user, the electronic device may run the application 1. Later, the application 1 may instruct, by delivering a rendering instruction, the electronic device to render and display a game picture.

In the example shown in FIG. 1, after the application 1 is run, the electronic device may display an interface 102 on a display.

For example, the game picture of the application 1 includes continuously displayed image pictures. In this way, a 1^{st} frame of image to a 5^{th} frame of image and subsequent images shown in FIG. 1 may be sequentially displayed on the interface 102 of the electronic device. Therefore, by displaying continuous images, the user can have the feelings of viewing continuous game pictures.

It should be noted that, in this embodiment of this application, the 1^{st} frame to the 5^{th} frame may be any five consecutive frames in a running process of a game. The 1^{st} frame does not necessarily refer to the first image displayed after the game is run.

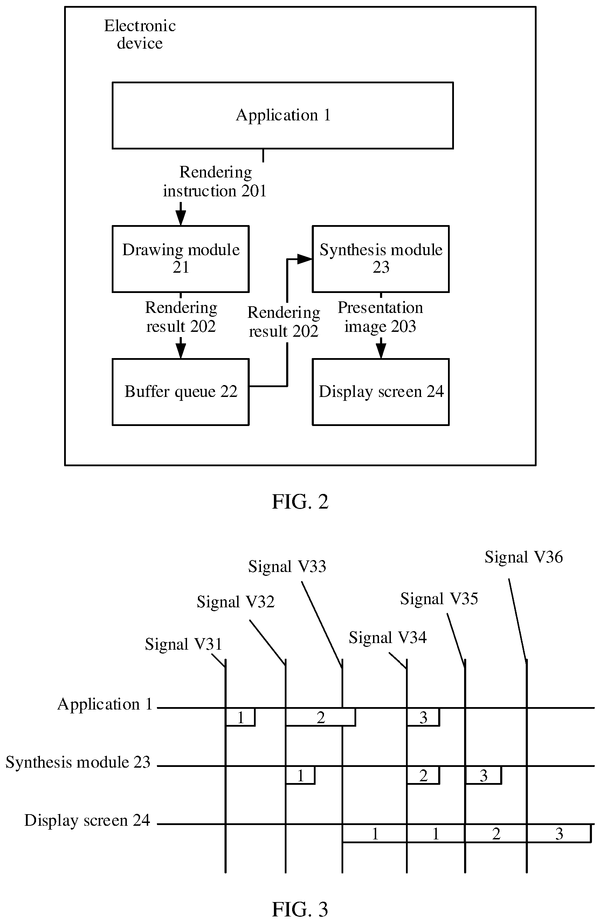

With reference to FIG. 2, an example for an internal processing mechanism of each frame of image (for example, the 1^{st} frame of image) is provided.

In the example of FIG. 2, the electronic device may be configured with a drawing module 21, a buffer queue 22, a synthesis module 23, and a display 24.

The drawing module 21 is configured to perform image rendering based on a rendering instruction delivered by an application program (for example, the application 1).

The buffer queue 22 may be used for temporarily storing a rendering result obtained after the image rendering.

The synthesis module 23 may be configured to obtain a rendering result from the buffer queue 22 and process (for example, synthesis processing) the rendering result when an occasion pre-configured in the electronic device arrives. The synthesis module 23 may be further configured to send image data obtained after the synthesis processing to the display 24, so that the display 24 performs image displaying based on the image data.

In the example of FIG. 2, an example of an interaction between modules in a process of processing and displaying the 1^{st} frame of image is provided.

As shown in FIG. 2, the application 1 may send a rendering instruction 201 to the drawing module 21. For example, the rendering instruction 201 may be used for instructing the drawing module 21 to draw the 1^{st} frame of image.

The drawing module 21 may invoke a component (for example, a graphics processing unit (GPU)) having an image rendering capability in the electronic device, to perform image rendering based on the rendering instruction 201. Therefore, the drawing module 21 may obtain a rendering result 202 of the 1^{st} frame of image corresponding to the rendering instruction 201.

The drawing module 21 may store the rendering result 202 of the 1^{st} frame of image to the buffer queue 22, to prepare for subsequent displaying of the 1^{st} frame of image.

The synthesis module 23 may obtain a stored image from the buffer queue 22 when a pre-configured occasion arrives. Exemplarily, the pre-configured occasion may correspond to arrival of a synchronization (Vsync) signal generated by the electronic device. In this way, the synthesis module 23 may obtain the rendering result 202 from the buffer queue 22 based on the arrival of the Vsync signal.

After obtaining the rendering result 202, the synthesis module 23 may perform synthesis processing on the rendering result 202, to obtain a presentation image 203 of the 1^{st} frame of image.

Therefore, the synthesis module 23 may send the presentation image 203 to the display 24, to implement displaying of the 1^{st} frame of image.

It may be understood that, for processing and displaying processes of other frames of images (for example, the 2^{nd} frame to the 5^{th} frame), refer to the processing mechanism of the 1^{st} frame of image shown in FIG. 2.

It should be noted that, in some cases, an occasion at which the application program (for example, the application 1) delivers the rendering instruction 201 and an occasion at which the display 24 displays the rendering instruction 201 may alternatively be controlled based on Vsync signals. For example, the Vsync signals include a signal V31 to a signal V36.

Referring to FIG. 3, the application 1 may deliver a rendering instruction (for example, the rendering instruction 201) of the 1^{st} frame of image after the signal V31 arrives. Correspondingly, the drawing module 21 may perform rendering processing on the 1^{st} frame of image after the signal V31 arrives, and complete queuing of the rendering result 202 of the 1^{st} frame of image to the buffer queue 22.

Next, when the signal V32 arrives, the synthesis module 23 may obtain the enqueued rendering result 202 from the buffer queue 22. The synthesis module 23 may perform synthesis processing on the rendering result 202, and complete synthesis processing on the 1^{st} frame of image before a next Vsync signal (for example, the signal V33) arrives. Therefore, the display 24 can receive a presentation image 204 of the 1^{st} frame of image before the signal V33 arrives. In this application, the signal V32 may alternatively be referred to as a first Vsync signal.

In this way, the display 24 may display the 1^{st} frame of image based on the presentation image 204 after the signal V33 arrives.

It may be understood that, the module components in the electronic device may process subsequent frames of images based on the foregoing similar processing mechanism.

Exemplarily, FIG. 3 further provides examples of processing the 2^{nd} frame of image and the 3^{rd} frame of image.

For the 2^{nd} frame of image, the application 1 may deliver a corresponding rendering instruction after the signal V32 arrives. Correspondingly, after the signal V32 arrives, the drawing module 21 may start to perform rendering processing on the 2^{nd} frame of image. In this example, the rendering duration of the 2^{nd} frame of image may be greater than one Vsync period. One Vsync period may be a time difference between arrivals of two adjacent Vsync signals.

In this way, when the signal V33 arrives, the 2^{nd} frame of image cannot be placed in the buffer queue 22 in time because rendering cannot be completed. Correspondingly, when the signal V33 arrives, the synthesis module 23 cannot obtain a rendering result of the 2^{nd} frame of image from the buffer queue 22 for synthesis processing. Correspondingly, the display may not obtain a presentation image of the 2^{nd} frame of image before a next Vsync signal (for example, the signal V34) arrives. Therefore, the 2^{nd} frame of image cannot be displayed on the display 24 within a displaying period between the signal V34 and the signal V35. For example, the display 24 may continue to display the 1^{st} frame of image within a displaying period between the signal V34 and the signal V35.

In the example shown in FIG. 3, the 2^{nd} frame of image can be rendered and enqueued before the signal V34 arrives. In this way, after the signal V34 arrives, the synthesis module 23 can obtain the rendering result of the 2^{nd} frame from the buffer queue 22 for synthesis processing. Before the signal V35 arrives, the display 24 may receive a presentation image of the 2^{nd} frame of image. Therefore, the display 24 may switch to display the 2^{nd} frame of image when the signal V35 arrives.

FIG. 3 further shows a processing and displaying mechanism of the 3^{rd} frame of image. In the example shown in FIG. 3, the rendering instruction of the 3^{rd} frame of image may be delivered by the application 1 after the signal V34 arrives, and the drawing module 21 performs rendering processing to obtain a corresponding rendering result. The rendering result may be placed in the buffer queue 22 to be consumed before the signal V35 arrives. In this way, after the signal V35 arrives, the synthesis module 23 may obtain the rendering result of the 3^{rd} frame of image from the buffer queue 22 and perform synthesis processing to obtain a corresponding presentation image. The presentation image of the 3^{rd} frame of image may be transmitted to the display 24 before the signal V36 arrives. Therefore, the display 24 may switch to display the 3^{rd} frame of image after the signal V36 arrives.

It can be seen that in the example shown in FIG. 3, due to the fact that the rendering duration of the 2^{nd} frame of image is greater than one Vsync period, the display 24 finally displays the 1^{st} frame of image continuously in two displaying periods.

It should be noted that, in some cases, the rendering instruction delivered by the application 1 may be related to an operation inputted by the user. For example, a user enters an operation of releasing a skill A on a game picture. Correspondingly, the rendering instruction delivered by the application 1 may instruct the electronic device to perform rendering and displaying of a corresponding image effect after the skill A is released.

For example, the application 1 receives, between the signal V31 and the signal V32, an operation inputted by the user for releasing the skill A. In this way, the 2^{nd} frame of image may include a corresponding image effect after the skill A is released. Apparently, the earlier the electronic device displays the 2^{nd} frame of image, the earlier the user can see a corresponding image effect on the interface after the skill A is released, so that a better hand following performance experience can be obtained.

However, with reference to the example in FIG. 3, due to the fact that the rendering duration of the 2^{nd} frame of image is greater than one Vsync period, the 2^{nd} frame of image that should be displayed in the displaying period from the signal V34 to the signal V35 is delayed to a next displaying period (for example, the signal V35 to the signal V36). In this way, after the user enters an operation, there is a delay of at least three Vsync periods (for example, a Vsync period between the signal V32 and the signal V35) from the time when the 2^{nd} frame of image starts to be rendered to the time when the 2^{nd} frame of image is displayed on the display. Correspondingly, the user cannot see a picture effect of the operation in time. Displaying of other frames of images also has relatively large delay of different degrees. Therefore, the problem of poor hand following performance in the existing solution is presented. In this application, a picture effect corresponding to an operation may alternatively be referred to as response content.

To resolve the foregoing problem, the technical solution provided in this embodiment of this application enables the synthesis module to perform acquisition and synthesis processing on the enqueued image data in advance without being limited to arrival of a next Vsync signal. In this way, the display can obtain a synthesizing result (for example, the presentation image) for displaying earlier.

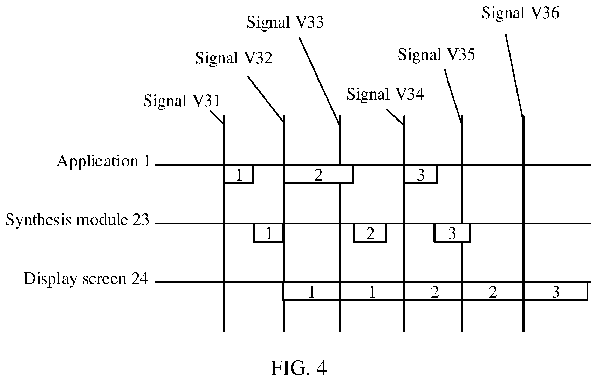

Exemplarily, FIG. 4 is an example of processing and displaying logic of the frames of images in a scenario shown in FIG. 3 after the solution provided in this embodiment of this application takes effect.

As shown in FIG. 4, after the solution provided in this embodiment of this application takes effect, for the 1^{st} frame of image, the application 1 may deliver a corresponding rendering instruction after the signal V31 arrives. The drawing module may perform rendering processing on the 1^{st} frame of image, to obtain a rendering result and enqueue the rendering result. The process is similar to the implementation of the current solution shown in FIG. 3.

Different from the implementation in the current solution, in the example in FIG. 4, the synthesis module 23 does not need to obtain data from the buffer queue 22 for subsequent processing until a next Vsync signal arrives. Correspondingly, the synthesis module 23 may directly obtain the enqueued data from the buffer queue 22 when new data is available in the buffer queue 22. For example, the synthesis module 23 may obtain the rendering result of the 1^{st} frame of image that is newly enqueued from the buffer queue 22. Correspondingly, the synthesis module 23 may perform synthesis processing on the rendering result of the 1^{st} frame of image, and send the presentation image of the 1^{st} frame of image obtained through the synthesis processing to the display 24 before the signal V32 arrives. Therefore, the display 24 may display the received 1^{st} frame of picture when a next Vsync signal (for example, the signal V32) arrives.

Therefore, compared with the existing solution shown in FIG. 3, in the solution provided in this application, a displaying occasion of the 1^{st} frame of image is advanced from the displaying period between the signal V33 and the signal V34 shown in FIG. 3 to the displaying period between the signal V32 and the signal V33. In this way, there is only a delay of one Vsync period from the time when the 1^{st} frame of image starts to be rendered to the time when the 1^{st} frame of image is displayed on the display. Therefore, the 1^{st} frame of image is displayed more timely.

Based on a processing mechanism similar to that of the 1^{st} frame, the hand following performance corresponding to other frames of images can also be significantly improved.

For example, for the 2^{nd} frame of image, as shown in FIG. 4, the application 1 may deliver a rendering instruction of the 2^{nd} frame of image after the signal V32 arrives. Correspondingly, similar to the example in the scenario in FIG. 3, the rendering duration of the 2^{nd} frame of image may be greater than one Vsync period. For example, after the signal V33 arrives and before the signal V34 arrives, rendering and enqueuing of the 2^{nd} frame of image can be completed. In this application, after the 2^{nd} frame of image is rendered and enqueued, the synthesis module 23 may directly obtain the rendering result of the 2^{nd} frame of image from the buffer queue 22 for synthesis processing without waiting for a next Vsync signal (for example, the signal V34) to arrive. Therefore, the display 24 can obtain the presentation image of the 2^{nd} frame of image before the signal V34 arrives. Correspondingly, after the signal V34 arrives, the display 24 may display the 2^{nd} frame of image.

Therefore, in the solution provided in this application, a displaying occasion of the 2^{nd} frame of image is advanced from the displaying period between the signal V35 and the signal V36 shown in FIG. 3 to the displaying period between the signal V34 and the signal V35. In this way, even if the rendering duration of the second frame of image is relatively long, there is only a delay of two Vsync periods from the time when the 2^{nd} frame of image starts to be rendered to the time when the 2^{nd} frame of image is displayed on the display. Therefore, the 2^{nd} frame of image is displayed more timely. Therefore, the user can see a picture effect obtained after the skill A is released earlier, thereby significantly improving the hand following performance in a process of running the application 1.

The following describes in detail the solution in embodiments of this application with reference to the accompanying drawings.

It is to be noted that the solutions provided in embodiments of this application can be applied to an electronic device. The electronic device may include at least one of a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, or a smart city device. A specific type of the electronic device is not specially limited in embodiments of this application. In this application, the electronic device may be configured with a display, for displaying an image.

In some embodiments, the electronic device may include a processor, an external memory interface, an internal memory, a universal serial bus (universal serial bus, USB) connector, a charge management module, a power supply management module, a battery, an antenna 1, an antenna 2, a mobile communication module, a wireless communication module, an audio module, a speaker, a receiver, a microphone, a headset jack, a sensor module, a button, a motor, an indicator, a camera module, a display, a subscriber identity module (subscriber identification module, SIM) card interface, and the like. The foregoing sensor module may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

The processor may include one or more processing units. For example, the processor may include an application processor (application processor, AP), a modem processor (Modem), a graphics processing unit (graphics processing unit, GPU), an image signal processor (image signal processor, ISP), a controller, a memory, a video codec, a digital signal processor (digital signal processor, DSP), a baseband processor (baseband processor, BP or BB), and/or a neural-network processing unit (neural-network processing unit, NPU), and the like. Different processing units may be independent components, or may be integrated into one or more processors.

The processor may generate an operating control signal based on an instruction operation code and a sequence signal, to complete control of fetching and executing instructions.

The processor may be further provided with a memory for storing instructions and data. In some embodiments, the memory in the processor may be a cache. The memory may store instructions or data used or frequently used by the processor. If the processor needs to use the instructions or data, the instructions or data may be directly invoked from the memory. This avoids repeated access, and reduces a waiting time of the processor, thereby improving system efficiency.

It may be noted that the structure schematically shown in embodiments of this application does not constitute a specific limitation on the electronic device. In some other embodiments of this application, the electronic device may include more or fewer components than those shown in the figure, or combine some components, or split some components, or have different component arrangements. The components may be implemented by hardware, software, or a combination of software and hardware.

In some embodiments, based on the above components, the electronic device may implement a display function by using the GPU, the display, the application processor, and the like. The GPU is a microprocessor for image processing and connects the display and the application processor. The GPU is configured to perform mathematical and geometric calculation and render graphics. The processor may include one or more GPUs, and execute program instructions to generate or change display information.

The display is configured to display an image, video, etc. The display includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device may include one or more displays.

The internal memory may be configured to store computer-executable program code, and the executable program code includes instructions. The internal memory may include a program storage area and a data storage area. The program storage area may store an operating system, an application required by at least one function (for example, a game application), and the like. The data storage area may store data (for example, image data, audio data, and an address book) and the like created when the electronic device is used. In addition, the internal memory may include a high-speed random access memory, and may further include a non-volatile memory, for example, at least one disk storage device, a flash storage device, or a universal flash storage (universal flash storage, UFS). The processor runs the instructions stored in the internal memory and/or the instructions stored in the memory disposed in the processor, to implement various functional methods and data processing of the electronic device.

The touch sensor is alternatively referred to as a "touch device". The touch sensor may be disposed on the display, and the touch sensor and the display form a touchscreen, which is also referred to as a "touch screen". The touch sensor is configured to detect a touch operation performed on or near the touch sensor. The touch sensor may transfer the detected touch operation to the application processor, to determine the touch event type. A visual output related to a touch operation may be provided through the display. In some other embodiments, the touch sensor may alternatively be disposed on a surface of the electronic device, and is located on a location different from that of the display.

In some embodiments of this application, the touch sensor may be implemented by using a touch panel (touch panel, TP). For example, the display is an LCD. In some implementations, the TP may be integrated with the LCD as a TP-LCD. In some other implementations, the TP may be separated from the LCD. In this way, a user may input an operation based on a picture (for example, a game picture) displayed on the LCD by touching a corresponding position of the picture. Correspondingly, the TP may receive the operation, and send operation information (for example, an operation type and location information) to the application program for subsequent processing.

In the foregoing example, composition of an electronic device in this application is provided. The embodiments of this application further provide another electronic device. The composition may be used for describing software composition logic of the electronic device.

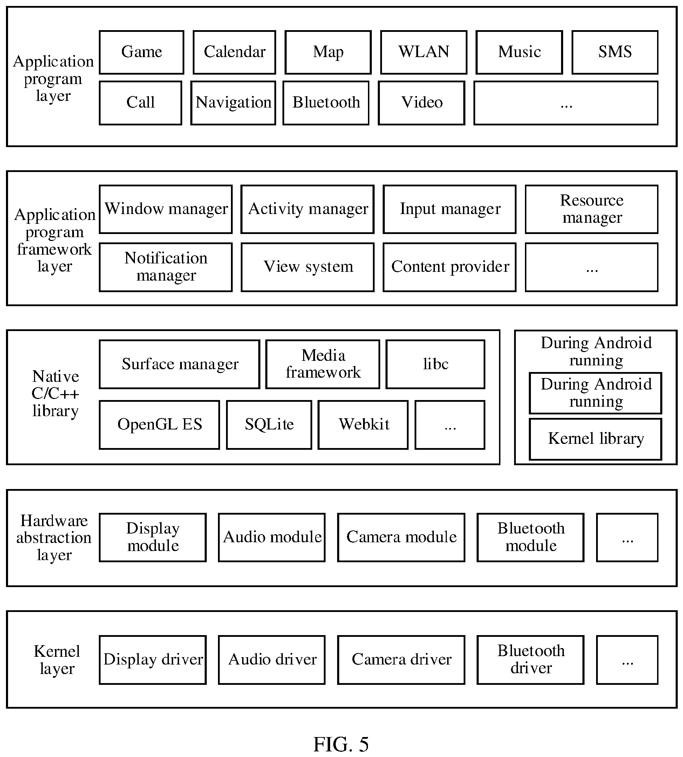

Exemplarily, FIG. 5 is a schematic diagram of composition of another electronic device according to an embodiment of this application.

In the example shown in FIG. 5, a software system of the electronic device may use a layered architecture, an event-driven architecture, a microkernel architecture, a microservice architecture, or a cloud architecture. In this embodiment of this application, an Android^{®} system with the layered architecture is used as an example to describe a software structure of the electronic device.

As shown in FIG. 5, software is divided into several layers by the layered architecture, and each layer has a clear role and task. The layers communicate with each other by using a software interface. In some embodiments, an Android^{®} system is divided into five layers: an application layer, an application program framework layer, an Android runtime (Android runtime, ART) and a native/++ library, a hardware abstract layer (Hardware Abstract Layer, HAL), and a kernel layer from top to bottom.

Detailed descriptions are separately provided below.

The application program layer may include a series of application program packages. The application program layer may alternatively be referred to as an application layer or an APP layer. As shown in FIG. 5, the application program package may include an application program such as a game, calendar, map, WLAN, music, short message service, call, navigation, Bluetooth, and video. For example, the game application package may correspond to the game application in the foregoing example, such as the application 1.

The application program framework layer may alternatively be referred to as a framework layer or a Framework layer. The framework layer provides an application programming interface (application programming interface, API) and a programming framework for the application program at the application layer. The application program framework layer includes some predefined functions.

Referring to FIG. 5, the application program framework layer may include a window manager, a content provider, a view system, a resource manager, a notification manager, an activity manager, an input manager, and the like.

The window manager provides a window manager service (Window Manager Service, WMS), and the WMS may be used for window management, window animation management, surface management, and as a transfer station for an input system.

The content provider is configured to store and acquire data, and enable the data to be accessible by an application program. The data may include a video, an image, audio, calls made and answered, a browsing history and bookmarks, an address book, and the like.

The view system includes visual controls such as a control for displaying a text and a control for displaying a picture. The view system may be configured to construct an application program. A display interface may be composed of one or more views. For example, a display interface including a short message service message notification icon may include a view for displaying a text and a view for displaying a picture. In an example, one or more Surface views (Surface) may be configured in the view system. One or more textures (texture) may be configured correspondingly for each surface view. Each texture may be used for storing some or all image content in a frame of image. It should be noted that in a specific implementation process of this application, image data in the surface view and/or the texture may be stored in a memory of the electronic device. Correspondingly, the electronic device may perform management such as writing, reading, and the like on each piece of data by using the file identifier of each piece of data in the memory.

The resource manager provides various resources for an application program, such as a localized character string, an icon, a picture, a layout file, and a video file.

The notification manager enables an application to display notification information in a status bar, and may be configured to convey a notification-type message. The notification-type message may automatically disappear after a short pause without requiring user interaction. For example, the notification manager is configured to notify download completion, a message prompt, and the like. The notification manager may alternatively be a notification that appears in a top status bar of the system in the form of a graph or scroll bar text, for example, a notification of an application program running in the background, or may be a notification that appears on the screen in the form of a dialog window. For example, text information is displayed in the status bar, an alert sound is produced, the electronic device vibrates, and an indicator light blinks.

The activity manager may provide an activity manager service (Activity Manager Service, AMS), and the AMS may be used to start, switch, and schedule system components (for example, an activity, a service, a content provider, and a broadcast receiver), and manage and schedule application processes.

The input manager can provide an input manager service (Input Manager Service, IMS), and the IMS can be used for inputs of a management system, such as touch screen input, key input, sensor input, and the like. The IMS obtains an event from an input device node, and assigns the event to an appropriate window through interaction with the WMS. In some embodiments, the IMS may include components such as an IMSReader and an IMSDispatcher (an IMS scheduling module). In an example, after receiving an operation of a user, a TP of the electronic device may send operation information to the IMSReader. The IMSReader may send the operation information to the IMSDispatcher for centralized management and allocation. For example, the IMSDispatcher may send the operation information to an application (such as a game application) that is at the foreground for displaying, so that the game application responds to the operation inputted by the user. For example, the game application generates a rendering instruction of a next frame of image based on the operation inputted by the user.

The Android runtime includes a kernel library and an Android runtime. The Android runtime is responsible for converting a source code to a machine code. The Android runtime mainly includes using an ahead or time (ahead or time, AOT) compilation technology and a just in time (just in time, JIT) compilation technology.

The kernel library is mainly configured to provide basic Java class library functions, for example, a basic data structure, mathematics, IO, tools, database, network and other libraries. The kernel library provides the API for the user to develop an Android application.

The native C/C++ library may include a plurality of functional modules, for example, a surface manager (surface manager), a media framework (Media Framework), libc, OpenGL ES, SQLite, and Webkit.

The surface manager is configured to manage a display subsystem and provide fusion of 2D and 3D layers for a plurality of applications. The media framework supports playback and recording of a plurality of common audio and video formats, a static image file, and the like. The media library may support a plurality of audio and video encoding formats, for example, MPEG4, H.264, MP3, AAC, AMR, JPG, and PNG. The OpenGL ES provides drawing and operation of 2D graphics and 3D graphics in an application. SQLite provides a lightweight relational database for applications of the electronic device.

The hardware abstraction layer runs in user space (user space), encapsulates a kernel layer drive, and provides a call interface to an upper layer. Exemplarily, the hardware abstraction layer may include a display module, an audio module, a camera module, a Bluetooth module, and the like. In some embodiments, the hardware abstraction layer may further include a touch module.

The kernel layer is a layer between hardware and software. The kernel layer at least includes a display driver (for example, a DRM Driver), a camera driver, an audio driver, and a Bluetooth driver. In some embodiments, the kernel layer may further include a touch driver.

It should be noted that the software composition shown in FIG. 5 is merely an exemplary description, and does not constitute a limitation to the electronic device related to the embodiments of this application. In some other embodiments, the electronic device may alternatively have another software composition.

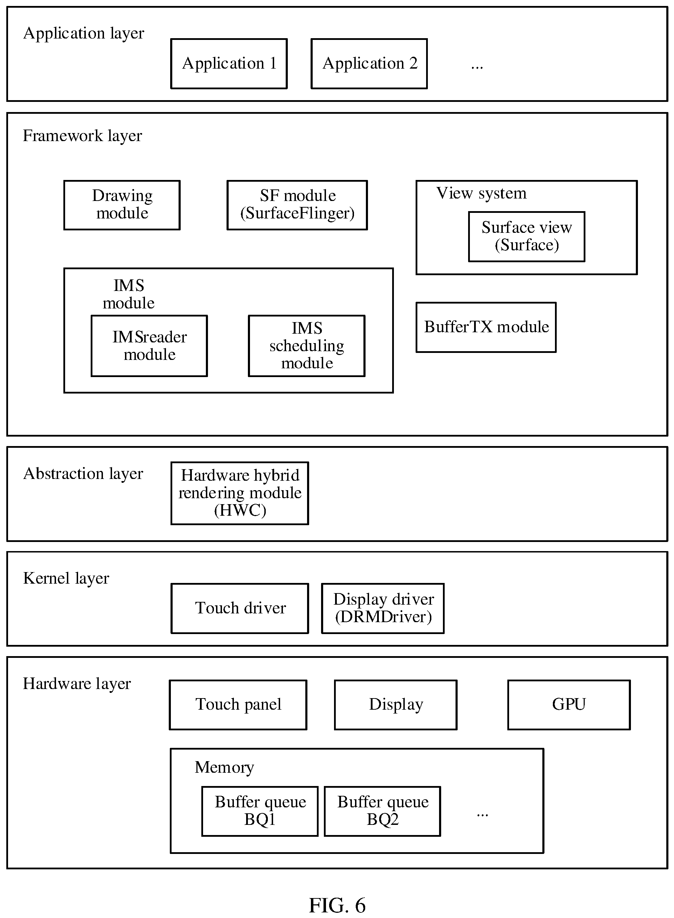

Exemplarily, FIG. 6 is a schematic diagram of composition of another electronic device according to an embodiment of this application. In the example shown in FIG. 6, various possible configurations of upper-layer components including software modules and hardware components are shown.

As shown in FIG. 6, in this example, the application layer may include a plurality of application programs. For example, the plurality of application programs may include an application 1, an application 2, and the like. The application 1 may be a game application. The application 2 may be a small window application or a multi-window application. For example, the application 2 may provide related controls (such as brightness adjustment and communication function configuration) in the running process of the game application to the user by displaying a window on the interface in the running process of the application 1. In some embodiments, the application 2 may be a system-level application such as a game center installed in the electronic device.

The framework layer of the electronic device may be configured with a drawing module, an SF module, a view system, an IMS module, and the like.

The drawing module is configured to perform image rendering in response to a rendering instruction delivered by an application program (for example, the application 1). The drawing module may correspond to the drawing module 21 in the foregoing example.

In some implementations, the drawing module may perform rendering processing based on the rendering instruction by using a GPU configured in the hardware layer of the electronic device, to obtain a corresponding rendering result.

In this embodiment of this application, the drawing module (or the application program) may be used as a producer of a buffer (buffer). The buffer may be a storage space configured in the memory. Each buffer may correspondingly store data of a rendering result. In this way, after completing rendering processing of a frame of image to obtain a rendering result, the drawing module may store the rendering result to a corresponding buffer, and enqueue the buffer.

In some implementations, enqueuing the buffer may correspond to storing data (for example, image information) of a rendering result stored in the buffer to a corresponding buffer queue (BufferQueue).

In some other implementations, enqueuing the buffer may correspond to storing an identifier (for example, a BufferID) corresponding to the buffer to a buffer queue. It may be understood that the BufferID may uniquely represent a buffer. In this way, when needing to use the buffer, the electronic device may determine, by obtaining the BufferID, address information that is of the buffer and that is in the memory, and read, by using the address information, the rendering result stored in the buffer.

In some other implementations, the queuing the Buffer may correspond to storing a file identifier that stores a rendering result in a buffer to a buffer queue. The file identifier may include address information indicating data stored in the buffer. In this way, when needing to use the buffer, the electronic device may determine, by using the file identifier, address information of the buffer in the memory corresponding to the buffer, and read, by using the address information, the rendering result stored in the buffer.

In the following example, the BufferQueue stores file identifiers of buffers.

The SF module is a SurfaceFlinger. The SF module may be configured to generate a Vsync signal based on information such as a currently displayed application and a refresh rate of a current display. In some implementations, the SF module may correspond to the synthesis module 23 shown in FIG. 4.

The SF module may be used as a consumer of a produced buffer, and obtains, from the buffer queue, an enqueued Buffer for consumption and displaying. Exemplarily, the consumption and presentation processing mechanism may correspond to that, the SF performs synthesis processing based on a rendering result corresponding to a buffer obtained from the buffer queue, to obtain a corresponding presentation image. The SF may directly or indirectly send the presentation image to the display of the electronic device, so that a next frame of image is displayed.

In this embodiment of this application, the SF module may have a capability of monitoring a buffer queue.

Exemplarily, the SF module may monitor whether there is a new buffer in the buffer queue. When a new buffer in the buffer queue is enqueued, the SF may directly obtain a newly-enqueued buffer for consumption and displaying without waiting for a next Vsync signal.

A view system may be further configured in the framework layer. The view system may include one or more Surface Views (Surface). When the drawing module performs rendering processing on the frame of image, drawing may be performed based on the one or more Surfaces. In this way, after a rendering operation of a frame of image is completed, an image obtained through rendering processing may be correspondingly stored in one or more Surfaces in the view system. In this embodiment of this application, one buffer may correspond to one or more Surfaces. When one buffer corresponds to a plurality of Surfaces, the plurality of Surfaces may respectively store partial content of a frame of image corresponding to the buffer. A set of all content in the plurality of Surfaces may constitute content of a frame of image corresponding to the buffer. In this way, after completing rendering processing of one frame of image, the drawing module may implement queue entering of one buffer, and obtain, from the view system, one or more Surfaces storing a rendering result.

Correspondingly, when consuming a buffer, by obtaining a file identifier of the buffer from BufferQueue, the SF module may obtain, from an address indicated by the file identifier, image data stored in a Surface corresponding to the buffer for synthesis processing.

As shown in FIG. 6, the framework layer may further be configured with an IMS module. With reference to the descriptions in FIG. 5, the IMS module may include an IMSReader module and an IMS scheduling module. The IMS scheduling module is an IMSDispatcher.

In some implementations of this application, the IMS module may be configured to transfer the operation information inputted by the user from a lower layer to an upper layer. The process is described in detail subsequently.

A hardware hybrid rendering module (HWC) may be configured at an abstraction layer of the electronic device. In some embodiments, the HWC may be configured to separately perform synthesis processing on a plurality of Surfaces. In some other embodiments, the HWC may implement synthesis processing together with the SF module of the framework layer. In some other embodiments, the synthesis processing may alternatively be separately performed by the SF module, and a corresponding HWC is configured to transfer, to the display, a synthesized image obtained after the synthesis processing.

In the following description, for example, the synthesis processing is independently performed by the SF module.

In some other embodiments of this application, the abstraction layer may further be configured with a hybrid renderer (compositor), configured to adapt to implement synthesis processing in different scenarios.

In the composition of the electronic device provided in FIG. 6, the kernel layer may be configured with a touch driver, a display driver, and the like. The touch driver may be configured to control a touch panel (TP) by upper layer software, and transfer information from the TP to an upper layer software module. The display driver may be a DRMDriver. The display driver may directly or indirectly receive the presentation image from the SF module, and control a corresponding display to display based on the presentation image.

Hardware components on the hardware layer shown in FIG. 6 may be configured in the electronic device, to support implementation of corresponding functions by the foregoing software modules.

Exemplarily, the electronic device may be configured with a touch panel, a display, a GPU, a memory, and the like.

In some embodiments of this application, when a plurality of application programs are run in the electronic device, each application program may be configured with a buffer queue correspondingly in the memory.

For example, the application 1 and the application 2 are run simultaneously. A buffer queue BQ1 corresponding to the application 1 may be configured in the memory. The buffer queue BQ1 is used for storing Buffer obtained after the drawing module executes the rendering instruction delivered by the application 1.

The memory may further be configured with a buffer queue BQ2 corresponding to the application 2. The buffer queue BQ2 is used for storing Buffer obtained after the drawing module executes the rendering instruction delivered by the application 2.

In some implementations, the plurality of buffer queues may be managed and maintained by using a general buffer module (for example, a BufferTX module). In different implementations, the BufferTX module may be configured inside a framework layer, an abstraction layer, a kernel layer, or a memory of the electronic device. The configuration selection of the BufferTX module is not limited in this embodiment of this application.

In the example in FIG. 6, for example, the BufferTX module is configured on the framework layer.

In some embodiments, the BufferTX module may separately configure an identifier field for each configured buffer queue. A value of the identifier field may be a first value, a second value, or the like. When the identifier field is the first value (for example, the first value is 0), it indicates that there is not an available buffer in the corresponding buffer queue, that is, the buffer queue is null. When the identifier field is the second value (for example, the second value is 1), it indicates that there is an available buffer in the corresponding buffer queue. In some implementations, the second value may alternatively be used for indicating a quantity of available buffers in the current buffer queue. For example, if the second value is 1, it indicates that the quantity of available buffers in the corresponding buffer queue is 1.

In an example, when there is a buffer to correspondingly enter the buffer queue BQ1 for the application 1, the identifier field corresponding to the buffer queue BQ1 in the BufferTX module may be configured as 1, thereby indicating that there is one buffer to be enqueued in the buffer queue BQ1.

After the SF obtains the buffer from the buffer queue BQ1 for consumption, the available buffer in the buffer queue BQ1 is null. An identifier field corresponding to the buffer queue BQ1 in the corresponding BufferTX module is configured as 0, thereby indicating that the available buffer in the buffer queue BQ1 is null, and there is no Buffer capable of being consumed.

Similarly, the BufferTX module may further manage and maintain, based on a similar mechanism, a buffer queue (for example, the buffer queue BQ2) corresponding to another application.

Therefore, the SF module may determine, by using identifier fields configured in the BufferTX module, whether there is a new buffer to be currently enqueued in the buffer queue.

In some other embodiments of this application, the memory may further be configured with a display queue (not shown in FIG. 6). The display queue may be managed by the display driver. For example, each time the display driver receives a presentation image, the display driver may place the presentation image into the display queue. Therefore, when a next Vsync signal arrives, the display driver obtains, from the display queue, a presentation image that first enters the display queue and sends the presentation image to the display for displaying.

The solutions provided in the embodiments of this application can be applied to the electronic device in foregoing FIG. 5 or FIG. 6.

In the following description, implementations of the solution provided in this embodiment of this application are described by an example in which the solution is applied to the electronic device shown in FIG. 6.

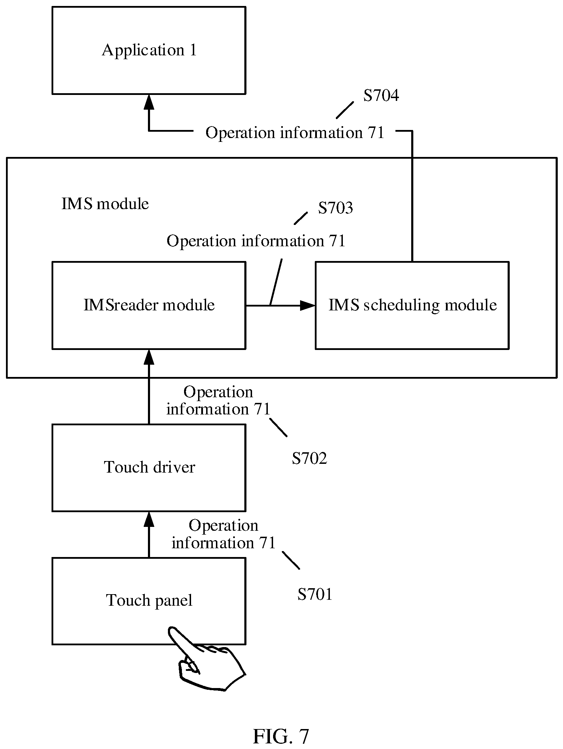

Exemplarily, FIG. 7 shows an example of interaction between modules according to an embodiment of this application. By means of the solution implementation shown in FIG. 7, reporting of an operation inputted by a user in a running process of an application program to the application program may be supported. In the example shown in FIG. 7, for example, the currently running application program is the application 1.

As shown in FIG. 7, the method may include:
S701: A touch panel of an electronic device receives an operation OP1 inputted by a user. The touch panel sends operation information 71 to the touch driver.

Exemplarily, when the display of the electronic device displays an interface in a running process of the application 1, the operation OP1 inputted by the user may be received. In a possible implementation, the operation OP1 may include an operation of clicking/tapping on a control displayed on a current interface. By means of the operation OP1, the user may instruct the currently controlled game character to perform a corresponding behavior, for example, release a skill A corresponding to the control.

Correspondingly, the touch panel may generate the operation information 71 based on the operation OP1. In some embodiments, the operation information 71 may include an operation type (for example, a click/tap operation or a slide operation) of the operation OP1, corresponding location information of the operation OP1 on a display, and the like.

Therefore, the touch panel may transfer the currently received operation information 71 to the upper-layer application module by using the touch driver.

S702: A touch driver sends the operation information to an IMSReader module.

S703: The IMSReader module sends the operation information 71 to an IMS scheduling module.

In some embodiments, the IMSReader module may monitor and obtain information reported by each driver. For example, the IMSReader may obtain the operation information 71 reported by the touch driver.

In this way, the IMSReader module may transmit the operation information 71 to the IMS scheduling module for centralized processing.

In some embodiments, the IMS scheduling module may determine, based on that a currently set-top displayed interface is an interface corresponding to the application 1, that the operation information 71 is an operation inputted by the user into the application 1.

S704: The IMS scheduling module sends the operation information 71 to an application 1.

Therefore, after the user enters the operation OP1 in a process of using the application 1, the application 1 can obtain the operation information 71 inputted by the user. Further, the application 1 may perform a subsequent operation based on the operation information 71.

Exemplarily, the application 1 may instruct, based on the operation information 71, the modules in the electronic device to cooperate with each other, to display an image corresponding to the operation information 71.

With reference to the example in FIG. 4, for example, the application 1 receives the operation information 71 in a Vsync period between the signal V31 and the signal V32. Correspondingly, the application 1 may instruct, based on the operation information 71 and after the signal V32 arrives, the electronic device to perform processing such as rendering and presenting the 2^{nd} frame of image. The 2^{nd} frame of image may include a picture effect corresponding to the operation OP1, for example, a picture effect corresponding to releasing the skill A.

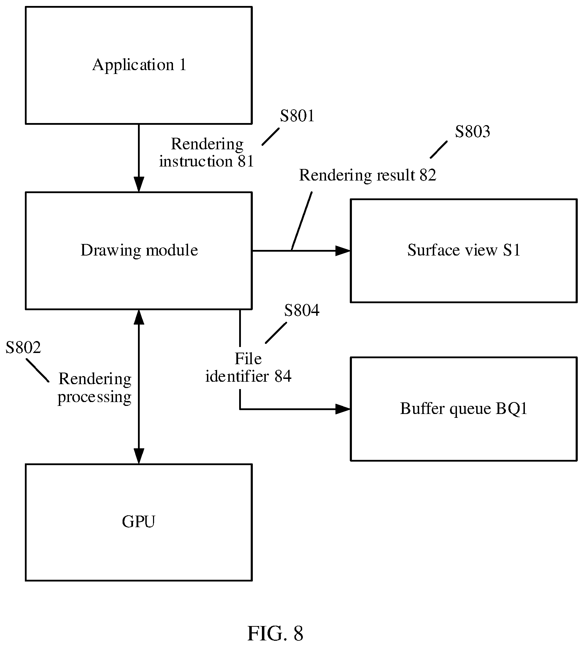

In a possible implementation, FIG. 8 shows another example of interaction between modules according to an embodiment of this application. By means of the solution implementation shown in FIG. 8, the image (for example, the 2^{nd} frame of image) corresponding to the operation information 71 can be generated and enqueued.

As shown in FIG. 8, the method may include:
S801: An application 1 sends a rendering instruction 81 to a drawing module. In this application, the rendering instruction 81 may alternatively be referred to as a first rendering instruction.

Exemplarily, the application 1 may generate the rendering instruction 81 based on the operation information 71. Therefore, by using the rendering instruction 81, the application 1 may instruct the electronic device to perform rendering processing on a frame of image (for example, the 2^{nd} frame of image) including an image effect corresponding to the operation OP1. The 2^{nd} frame of image may be replaced with an N^{th} frame of image.

S802: The drawing module invokes a GPU to perform rendering processing based on a rendering instruction 81, to obtain a rendering result 82. In this application, the rendering result 82 may alternatively be referred to as a first rendering result.

S803: The drawing module stores the rendering result 82 in a surface view S1.

Exemplarily, the drawing module may send the rendering instruction 81 to the GPU, so that the GPU performs rendering processing on the 2^{nd} frame of image based on the rendering instruction 81.

Through the rendering processing, one or more textures corresponding to the 2^{nd} frame of image can be obtained.

In this example, for example, the rendering result 82 corresponding to the rendering instruction 81 is stored in the surface view S1.

S804: The drawing module stores a file identifier 84 in a buffer queue BQ1. The buffer queue BQ1 may alternatively be referred to as a first buffer queue.

The file identifier 84 may correspond to the rendering result 82.

In some embodiments, the file identifier 84 may indicate a storage location of the rendering result 82 in the electronic device. It may be understood that, based on the foregoing related descriptions of frame buffering, generating, enqueuing, consuming, and dequeuing, the storage location of the rendering result 82 in the electronic device may alternatively correspond to a location of a buffer (for example, a Buffer1) configured for the current rendering instruction 81 in the memory.

In this way, in this example, the file identifier 84 is stored in the buffer queue BQ1, so that the Buffer1 corresponding to the rendering result 82 can be generated and enqueued.

With reference to the description about the BufferTX module in the foregoing example, in some embodiments of this application, an identifier field 1 of the buffer queue BQ1 may be configured in the BufferTX module. After the Buffer1 corresponding to S804 is enqueued in the buffer queue BQ1, the identifier field 1 of the buffer queue BQ1 in the BufferTX module may be configured as 1, thereby indicating that a new buffer is enqueued in the current buffer queue BQ1 to be consumed. The identifier field 1 may alternatively be referred to as a first identifier field.

With reference to the example in FIG. 4, for example, the rendering instruction 81 is used for instructing to render the 2^{nd} frame of image.

In this way, the application 1 may perform S801 after the signal V32 arrives. Correspondingly, after the signal V33 arrives, the drawing module completes enqueuing of the Buffer1 corresponding to S804.

In this embodiment of this application, the SF module may be configured to obtain a buffer from the buffer queue for consumption and displaying without waiting for a next Vsync signal to arrive after a new buffer is enqueued.

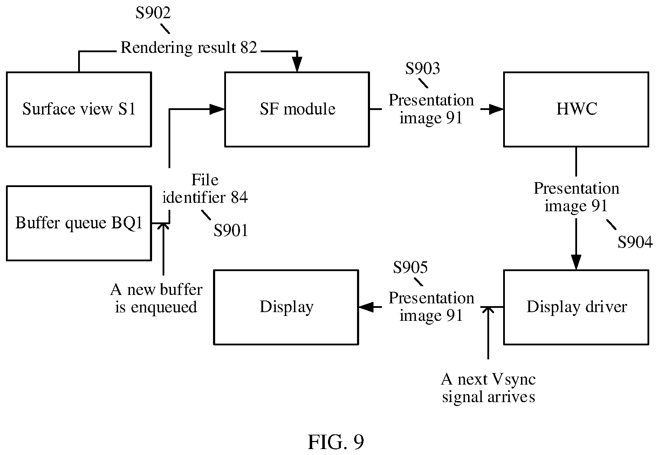

Exemplarily, FIG. 9 is a schematic diagram of another interaction between modules according to an embodiment of this application. By means of the solution implementation shown in FIG. 9, the electronic device can implement rapid consumption and presentation of a newly enqueued Buffer.

As shown in FIG. 9, the method may include:
S901: An SF module obtains a file identifier 84 from a buffer queue BQ1.

Exemplarily, after the file identifier 84 is enqueued, the SF module may sense that a new buffer is enqueued, and then directly obtain the buffer for consumption and presentation.

In a possible implementation, the SF module may monitor an identifier field of a buffer queue configured in the BufferTX module for each currently running application, to determine whether there is a new buffer currently enqueued.

For example, the SF may determine, based on that the identifier field 1 is configured as 1, that there is a new buffer to be enqueued in the buffer queue BQ1.

Therefore, SF module may directly obtain the Buffer1 from the buffer queue BQ1 for subsequent processing.

In this example, for example, buffer enqueuing is performed by placing the file identifier 84 in the buffer queue. Correspondingly, information about the newly-enqueued buffer obtained by the SF module from the buffer queue BQ1 may include the file identifier 84. The file identifier 84 may correspond to a storage address of the Buffer1, or correspond to a storage address of the rendering result 82.

S902: The SF module obtains a rendering result 82 of a surface view S1 based on the file identifier 84.

Exemplarily, the SF module may obtain, based on an address indicated by the file identifier 84, the rendering result 82 that is drawn in the surface view S1.

Therefore, the SF module may perform synthesis processing based on the rendering result 82, to obtain complete content of the frame of image indicated by the rendering instruction 81.

Exemplarily, the SF module may perform synthesis processing based on the rendering result 82 to obtain a corresponding presentation image 91. The presentation image 91 may alternatively be referred to as a first presentation image.

It should be noted that in the descriptions of FIG. 8 to FIG. 9, for example, the frame of image correspondingly indicated by the rendering instruction 81 is rendered and then stored in the surface view S1. In some other embodiments, a result obtained after rendering is performed by the drawing module based on the rendering instruction may be stored in a plurality of surface views. In this way, the SF module may perform synthesis processing on a rendering result from the plurality of surface views based on a dequeued file identifier, thereby obtaining content of a complete frame of image.

S903: The SF module transmits a presentation image 91 to an HWC.

S904: The HWC transmits the presentation image 91 to a display driver.

In this example, after completing the synthesis processing, the SF module may transmit the obtained presentation image 91 to the display driver by using the HWC to wait for displaying.

S905: The display driver transmits the presentation image 91 to a display. The display performs displaying based on the presentation image 91.

Exemplarily, after receiving the presentation image 91, the display driver may store the presentation image 91 in a presentation queue, so that the first presentation image that is received earliest is obtained from the presentation queue for displaying after a next Vsync signal arrives. In this example, for example, after the presentation image 91 is enqueued in the presentation queue, the presentation queue includes only the presentation image 91.

In this way, after a next Vsync signal arrives, the display driver may obtain the presentation image 91 from the display sending queue, and transmit the presentation image 91 to the display for displaying.

With reference to the example in FIG. 4, after the signal V33 arrives and before the signal V34 arrives, the drawing module may complete rendering and enqueuing of the rendering result corresponding to the 2^{nd} frame of image. Based on the solution implementation shown in FIG. 9, the SF module (that is, the synthesis module 23 shown in FIG. 4) may directly consume and present the rendering result of the 2^{nd} frame of image after the 2^{nd} frame of image is rendered into a queue without waiting for the signal V34 to arrive. Therefore, before the signal V34 arrives, the SF module may perform synthesizing to obtain a corresponding presentation image (for example, the presentation image 91) based on the rendering result of the 2^{nd} frame of image, and transmit the corresponding presentation image to the display driver to wait for displaying. In this way, when a next Vsync signal (for example, the signal V34) arrives, the display driver may control, based on the presentation image 91, the display to display the 2^{nd} frame of image.

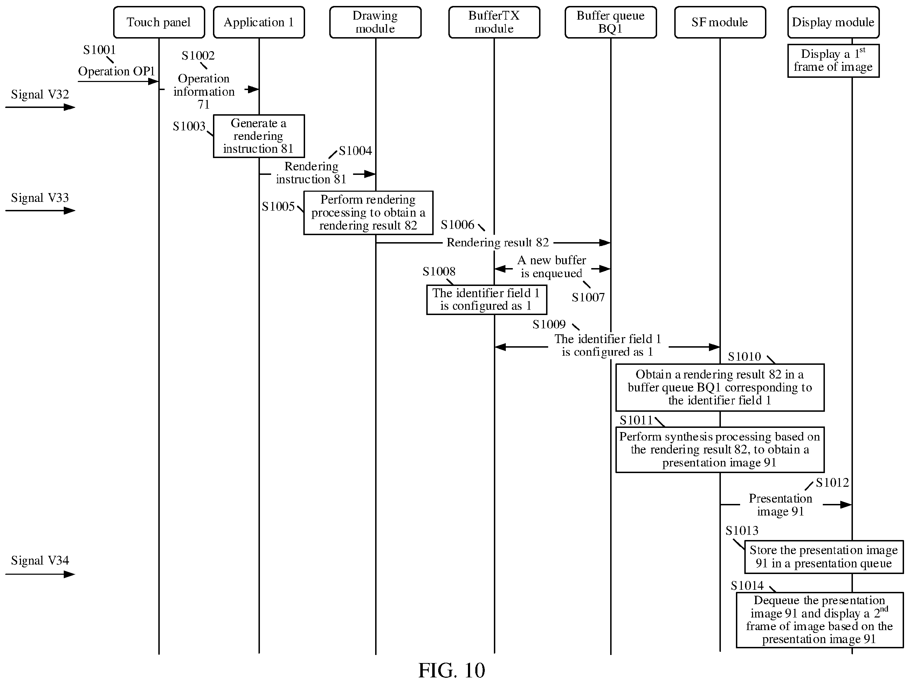

To describe the solution provided in this embodiment of this application more clearly, the rendering and presenting processes of the 2^{nd} frame of image are described below by using a schematic diagram of a process of interaction between modules shown in FIG. 10. The flowchart shown in FIG. 10 is described by using that the rendering result is stored in the buffer queue. With reference to the foregoing description of generation and enqueuing of the buffer, in a specific implementation, the queuing of the rendering result to the buffer queue shown in FIG. 10 may alternatively be implemented by enqueuing the corresponding file identifier to the buffer queue. Correspondingly, when buffer consumption and presentation needs to be performed, after the file identifier is obtained from the buffer queue, the rendering result may be obtained based on the storage address indicated by the file identifier.

As shown in FIG. 10, the method may include:
S1001: A touch panel receives an operation OP1. The operation OP1 may alternatively be referred to as a first operation.

Exemplarily, before the touch panel receives the operation OP1, a 1^{st} frame of image may be displayed on a display.

In this way, the operation OP1 may be an operation inputted by a user on the 1^{st} frame of image. In this way, the touch panel may generate operation information 71 based on the operation OP1 inputted by the user. In some embodiments, the operation information 71 may include an operation type, location information, and the like of the operation OP1. The operation information 71 may alternatively be referred to as first operation information.

S1002: The touch panel sends operation information 71 to an application 1.

Exemplarily, with reference to the description in FIG. 7, the touch panel may send the operation information 71 to the application 1 by using a touch driver and an IMS module.

In this example, after the application 1 receives the operation information 71, a next Vsync signal (for example, the signal V32) arrives.

S1003. The application 1 generates a rendering instruction 81.

Exemplarily, the application 1 may generate a new rendering instruction based on arrival of the signal V32 and instruct another component of the electronic device to render a new graphic.

In some embodiments, the application 1 may generate a rendering instruction 81 based on arrival of the signal V32 and based on the received operation information 71.

S1004: The application 1 sends a rendering instruction 81 to a drawing module.

Therefore, the application 1 may instruct, by using the rendering instruction 81, the drawing module to draw a new image. For example, the new image may be a subsequent image of a 1^{st} frame of image currently displayed, for example, a 2^{nd} frame of image.

S1005: The drawing module performs rendering processing to obtain a rendering result 82.

Exemplarily, the drawing module may perform rendering processing with a GPU configured in the electronic device based on the rendering instruction 81, to obtain the corresponding rendering result 82.

It should be noted that with reference to the example in FIG. 4, in this example, rendering processing corresponding to the rendering instruction 81 executed by the drawing module may last for two Vsync periods, and the rendering processing is completed before a second Vsync period (for example, the Vysnc period between the signal V33 and the signal V34) ends.

S1006: The drawing module enqueues the rendering result 82 in a buffer queue BQ1.

The buffer queue BQ1 may be a buffer queue configured corresponding to the application 1. In this way, the rendering result corresponding to the 2^{nd} frame of image may be generated in a queue.

S1007: A BufferTX module determines that a new buffer is enqueued.

Exemplarily, the BufferTX module may be configured to monitor a new buffer enqueuing status of each buffer queue.

In this example, after the buffer queue BQ1 receives enqueuing of the rendering result 82, the BufferTX module may determine that the buffer queue BQ1 has a new buffer enqueued for consumption.

S1008: The BufferTX module configures an identifier field 1 as 1.

The identifier field 1 may be a field for identifying an available buffer in the buffer queue BQ1 in the BufferTX module.

In this example, after a new buffer (for example, a buffer corresponding to the rendering result 82) is enqueued in the buffer queue BQ1, the BufferTX module may configure the identifier field 1 corresponding to the buffer queue BQ1 from 0 to 1, thereby indicating that the available buffer in the buffer queue BQ1 is changed from null to 1.

S1009: An SF module determines that the identifier field 1 is configured as 1.

In this example, the SF module may monitor a change status of each identifier field in the BufferTX module.

For example, the SF module may determine, based on that the identifier field 1 in the BufferTX module is configured as 1, that there is one buffer to be consumed in the corresponding buffer queue BQ1.

S1010: The SF module obtains a rendering result 82 in a buffer queue BQ1 corresponding to the identifier field 1.

Exemplarily, the SF module may store a mapping between each identifier field and a corresponding buffer queue. In this way, after determining that the identifier field 1 is changed from 0 to 1 in the BufferTX module, the SF module may determine, based on the mapping, that there is a new buffer to be enqueued in the buffer queue BQ1. Therefore, the SF module may directly obtain the enqueued buffer from the buffer queue BQ1 for consumption and displaying without waiting for a next Vsync signal.

In an implementation, the SF module may obtain the enqueued rendering result 82 from the buffer queue BQ1.

S1011: The SF module performs synthesis processing based on the rendering result 82, to obtain a presentation image 91.

Therefore, the SF module may trigger presentation and consumption of the 2^{nd} frame of image without waiting for a next Vsync signal (for example, the signal V34) to arrive. For example, before the signal V34 arrives, the SF module may complete synthesis processing on the 2^{nd} frame of image to obtain the corresponding presentation image 91.

S1012: The SF module transmits the presentation image 91 to a display module. In this application, the display module may include a display driver and a display.

S1013: The display module stores the presentation image 91 in a presentation queue.

For example, the SF module transmits the presentation image 91 to a display driver in the display module. In this way, the display driver may store the received presentation image 91 in the presentation queue for displaying.

S1014: The display module dequeues the presentation image 91 based on arrival of a signal V34, and displays the 2^{nd} frame of image based on the presentation image 91.

Exemplarily, the display driver of the display module may obtain the stored presentation image 91 from the presentation queue based on the signal V34, and control a display of the display module to perform displaying based on the presentation image 91.

In this example, the presentation image 91 may correspond to the 2^{nd} frame of image. In this way, switching from a lower 1^{st} frame of image to a 2^{nd} frame of image on the display can be implemented.

It may be understood that, through the solution implementation shown in FIG. 10, even if the rendering processing of the 2^{nd} frame of image takes a relatively long time, there is only a delay of two Vsync periods from the time when the application 1 delivers the rendering instruction 81 to the time when the display switches to display the corresponding 2^{nd} frame of image. Therefore, when the 2^{nd} frame of image includes a response effect of the operation (for example, the operation OP1) inputted by the user, the user can more quickly see the effect of the inputted operation on the display, thereby improving display and hand following performance in a game running process.

In FIG. 8 to FIG. 10, rendering and displaying mechanisms of a frame of image are described in detail. It may be understood that, for rendering and displaying of other frames of images, the solutions provided in the embodiments of this application may alternatively be referred, so that the display can more quickly display a response effect corresponding to an operation that has been inputted by the user, thereby improving the hand following performance.

When the solution provided in this embodiment of this application takes effect, the effect shown in FIG. 4 is correspondingly obtained. Compared with the implementation effect of the existing solution shown in FIG. 3, significant benefits can be obtained in both a synthesizing process of the SF module and a displaying process on a display.

It is verified by an experiment that, the following Table 1 provides a delay comparison between a synthesizing process and a displaying process before the solution provided in this embodiment of this application takes effect. For example, the frame rate is 120 Hz.

**Table 1**

| | Synthesizing delay | Display delay |
|---|---|---|
| Before the solution of this application takes effect | 7 ms | 8 ms |
| After the solution of this application takes effect | 0.8 ms | 2 ms |

In the example in Table 1, the synthesizing delay may be a delay from the time when the rendering instruction of the current frame of image is delivered to the time when the synthesis processing of the current frame of image starts. The display delay may be a delay between displaying the current frame of image on the display after the rendering instruction of the current frame of image is delivered.

It can be seen that after the solution provided in this embodiment of this application takes effect, a synthesizing delay and a display delay can be significantly shortened, thereby improving the hand following performance.

It should be noted that in the example shown in FIG. 10, the SF module may obtains a new enqueued Buffer from a buffer queue for consumption based on that there is a new buffer enqueued in a buffer queue corresponding to any application, that is, without waiting for a next Vsync signal to arrive. In some examples, the implementation may alternatively be referred to as starting an XSync solution, or enabling an XSync solution. That is, after the XSync solution is started, the SF module may consume a newly enqueued buffer without waiting for a next Vsync signal to arrive.

In some other embodiments, after determining that there is a new buffer enqueued (for example, after performing S1009), the SF module may determine, based on related information of the buffer queue BQ1 corresponding to the identifier field 1, whether to start the XSync solution.

In a possible implementation, an application white list may be configured in the electronic device (for example, the SF module of the electronic device). The application white list may include a package name of at least one application program. For example, the package name of the at least one application program may separately correspond to a preset package name of a game application.

After performing S1009 and before performing S1010, the SF module may determine, based on that the identifier field 1 is configured as 1, that there is a new buffer to be enqueued in the current buffer queue BQ1.

The SF module may determine, based on a name of the buffer queue BQ1, whether an application program corresponding to the buffer queue BQ1 is included in the application white list. For example, if the name of the buffer queue BQ1 includes the package name of the application 1, the application 1 is included in the application white list, the application program corresponding to the buffer queue BQ1 is included in the application white list.

Therefore, the SF module may determine to start the XSync solution based on that the application program corresponding to the buffer queue with the new buffer is included in the application white list. That is, before the signal V34 arrives, S1010 is performed, to implement consumption of a newly enqueued buffer in the buffer queue BQ1.

In some other embodiments, if an application program corresponding to a buffer queue into which a new buffer is enqueued is not included in the application white list, the SF module may not start the XSync solution.

In this way, the SF module may wait for a next Vsync signal (for example, the signal V34) to arrive, and then obtain an enqueued buffer for consumption.

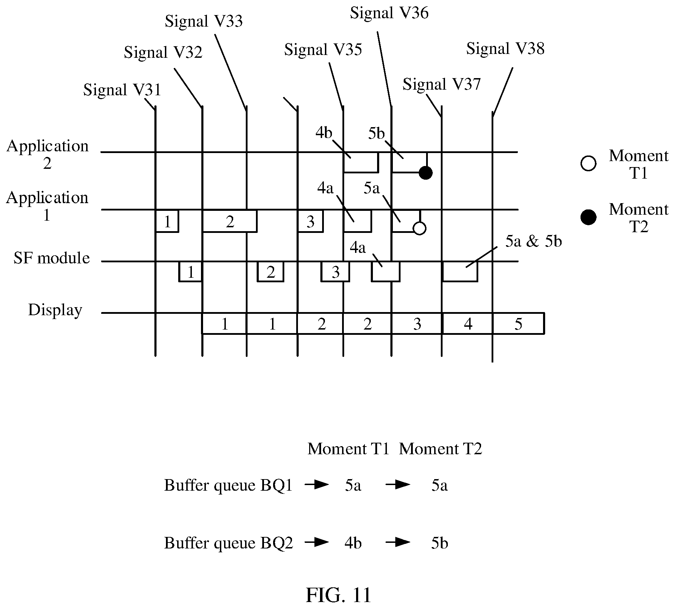

For example, FIG. 11 is a schematic diagram of an embodiment of this application.

As shown in FIG. 11, the rendering instructions of the 1^{st} frame of image to the 3^{rd} frame of image may all be delivered by the application 1. Correspondingly, for example, the application 1 is included in the application white list. With reference to the foregoing descriptions for starting the XSync solution, the synthesis processing performed by the SF module on any one of the 1^{st} frame of image to the 3^{rd} frame of image may be performed without waiting for a next Vsync signal to arrive.

For a 4^{th} frame of image, the application 1 may deliver a rendering instruction to render an image 4a when the signal V35 arrives. In addition, the application 2 may further deliver a rendering instruction to render an image 4b when the signal V35 arrives.

For example, the application 1 is included in the application white list, and the application 2 is not included in the application white list.

In this way, for the image 4a, the SF module may start the XSync solution, to perform quick synthesis processing. However, for the image 4b, the SF module may not start the XSync solution, and based on a native mechanism, after waiting for a next Vsync signal to arrive, corresponding synthesis processing is performed on the image 4b.

In an example, a process in which the SF module processes the image 4a is used.

After the image 4a is rendered and enqueued, the SF module may start the XSync solution based on that the application 1 is included in the application white list. Therefore, the SF module may dequeue the rendering result of the image 4a for synthesis processing without waiting for a signal V36 to arrive. In the example shown in FIG. 11, the synthesis processing corresponding to the image 4a may be completed in a Vsync period from the signal V36 to a signal V37. In this way, the display may obtain a presentation image of the image 4a before the signal V37 arrives, and further display the image 4a after the signal V37 arrives. The image 4a corresponds to a 4^{th} frame of image displayed on the display.

For example, a process in which the SF module processes the image 4b is used.

After the image 4b is rendered and enqueued, the SF module may not start an XSync solution based on that the application 2 is not included in the application white list. For example, after the image 4b is rendered and enqueued, the SF module may wait for a next Vsync signal (for example, a signal V36) to arrive. When the signal V36 arrives, the SF module is performing synthesis processing on the image 4a. The synthesis processing for the image 4b may include continuously waiting for a next Vsync signal to arrive. For example, the SF module may perform synthesis processing on a rendering result of the image 4b after a signal V37 arrives.

It should be noted that the foregoing example is described by using an example in which both the application 1 and the application 2 are not delivering a rendering instruction when the signal V36 after the signal V35 arrives. In this way, after the signal V37 arrives, the buffer queue BQ2 corresponding to the application 2 still stores a rendering result of the unconsumed image 4b. Therefore, after the signal V37 arrives, the SF module may dequeue the rendering result of the image 4b from the buffer queue BQ2 for consumption.

Generally, the application program may continuously deliver rendering instructions.

Exemplarily, in the scenario shown in FIG. 11, when the signal V35 arrives, the application 1 delivers the rendering instruction of the image 4a, and the application 2 delivers the rendering instruction of the image 4b. When the signal V36 arrives, the application 1 may continuously deliver the rendering instruction of the image 5a. The application 2 may continuously deliver the rendering instruction of the image 5b.

In this way, in the example shown in FIG. 11, when the signal V37 arrives, the buffer queue BQ2 may not include the rendering result of the image 4b.

In an example, FIG. 11 shows corresponding situations of rendering results in a buffer queue BQ1 and a buffer queue BQ2 at a moment T1 and a moment T2.

The moment T1 may be a moment at which the image 5a is rendered and enqueued. The moment T2 may be a moment at which the image 5b is rendered and enqueued. The moment T1 and the moment T2 may be two moments within the Vsync period corresponding to the signal V36 to the signal V37.

As shown in FIG. 11, at the moment T1, due to the fact that the image 5a is rendered and enqueued, the buffer queue BQ1 may store a rendering result of the image 5a to be consumed. Correspondingly, the image 5b has not been rendered yet. Therefore, the buffer queue BQ2 may still store the rendering result of the image 4b to be consumed.

However, at the moment T2, due to the fact that the image 5b is already rendered and enqueued, the buffer queue BQ2 may store a rendering result of the image 5b to be consumed.

Therefore, descriptions are provided based on the scenario of the 5^{th} frame of image shown in FIG. 11 and implementation of starting the XSync solution in the foregoing descriptions. In some embodiments of this application, in a scenario of displaying a plurality of applications (or windows), determining, by the SF module, whether to trigger an XSync solution for a newly enqueued buffer may be comprehensively determining based on conditions of available buffers in buffer queues of the plurality of applications.

Exemplarily, for example, for the 4^{th} frame of image,
after the rendering result of the image 4a is enqueued, the rendering result of the image 4b is not rendered and enqueued yet. In this way, the identifier fields configured in the BufferTX module may include: the identifier field 1 of the buffer queue BQ1 being configured as 1, and the identifier field 2 of the buffer queue BQ2 being configured as 0. That is, the current available buffer is included in the buffer queue BQ1.

Therefore, the SF module may trigger, based on the name of the identifier field 1 configured as 1 and the package name included in the application white list, an XSync solution on a newly-enqueued buffer (for example, the image 4a) in the buffer queue BQ1.

For example, for the 5^{th} frame of image,
after the rendering result of the image 5a is enqueued, the rendering result of the image 5b is not rendered and enqueued yet. In this way, the identifier fields configured in the BufferTX module may include: the identifier field 1 of the buffer queue BQ1 being configured as 1, and the identifier field 2 of the buffer queue BQ2 being configured as 1. The identifier field 2 of the buffer queue BQ2 is configured as 1, which is caused by that the rendering result of the image 4b is not consumed yet.

Therefore, the SF module may skip triggering the XSync solution for the current available buffer based on that the buffer queue in which the current available buffer is included includes the buffer queue BQ2 that is not in the application white list.

In this way, the SF module may wait for a next Vsync signal (for example, the signal V37) to arrive, obtain all current available buffers to perform synthesis processing, and obtain a presentation image of the corresponding 5^{th} frame of image.

For example, when the signal V37 arrives, the SF module may obtain the rendering result of the image 5a in the buffer queue BQ1 and the rendering result of the image 5b in the buffer queue BQ2 that are currently available. Based on the rendering results of the image 5a and the image 5b, the synthesis processing includes obtaining the presentation image of the 5^{th} frame and sending the presentation image to the display driver.

The display driver may perform displaying based on the presentation image of the 5^{th} frame when the signal V38 arrives.

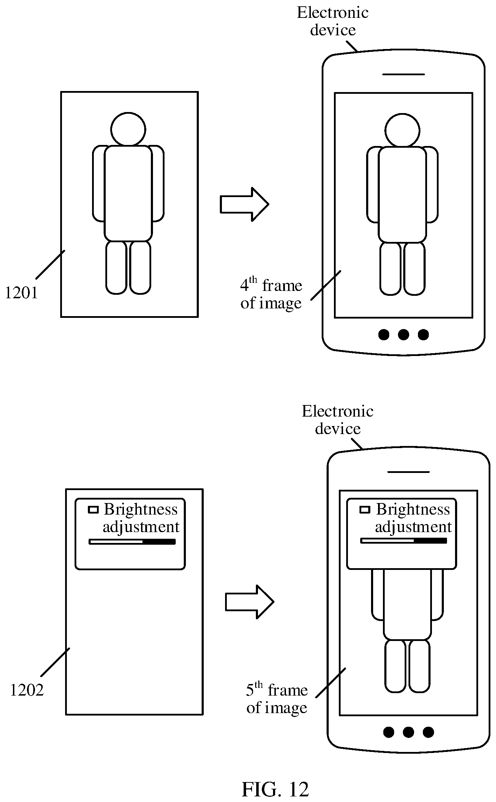

For example, referring to FIG. 12, the rendering result of the image 4a is shown in 1201. Correspondingly, when displaying the 4^{th} frame of image on the display, the electronic device may perform displaying according to the presentation image obtained after the synthesis processing on the rendering result of the image 4a.

In this example, the application 2 may instruct the electronic device to render and display the image 4b and the image 5b, to implement displaying in a small window 1202.

In this way, based on the processing mechanism of the 4^{th} frame of image and the 5^{th} frame of image shown in FIG. 11, an effect that the 4^{th} frame of image includes the game picture corresponding to the application 1 shown in FIG. 12 can be obtained. Displaying in the 5^{th} frame may include both the game picture indicated by the application 1 and the small window picture indicated by the application 2.

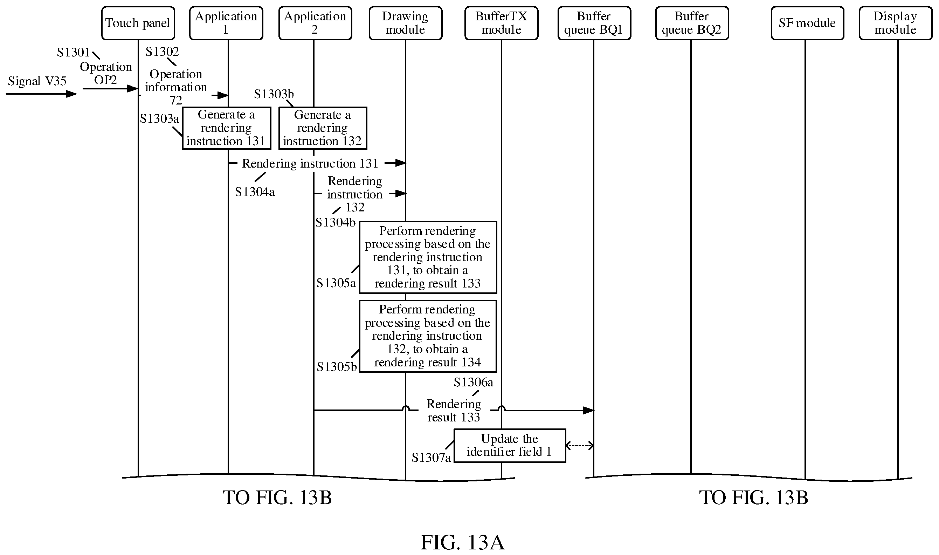

To describe a processing mechanism in a scenario of a plurality of applications (windows) corresponding to the 4^{th} frame and the 5^{th} frame of image more clearly, FIG. 13A to FIG. 14B are schematic flowcharts of another interaction between modules according to an embodiment of this application. By means of this solution, the electronic device can accurately process the 4^{th} frame of image and the 5^{th} frame of image, to obtain the display effects shown in FIG. 11 and FIG. 12.

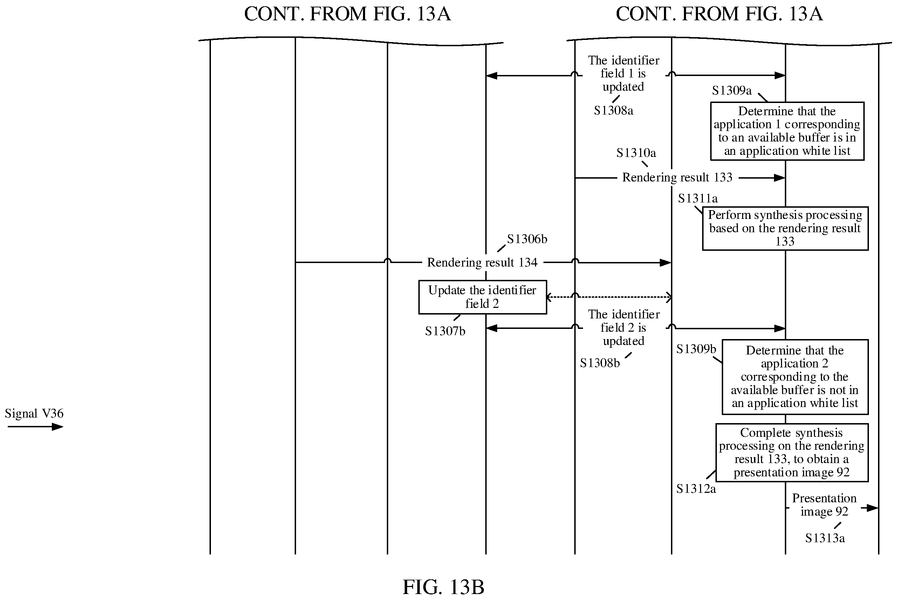

FIG. 13A and FIG. 13B provide processing logic in a Vsync period of a signal V35 to a signal V36.

As shown in FIG. 13A and FIG. 13B, the method may include:
S1301: A touch panel receives an operation OP2.

Exemplarily, the operation OP2 may be an operation inputted by a user for an application 2.

For example, the application 2 is a small window application. The operation OP2 may correspond to an operation such as dragging, sliding, or tapping a control corresponding to the application 2 on the current display interface.

By using the operation OP2, the user may instruct the electronic device to display the small window of the application 2.

It may be understood that, in a running process of the application 1, when the electronic device receives the operation OP2, the electronic device may simultaneously display the game picture of the application 1 and the small window interface corresponding to the operation OP2 in subsequent image display.

S1302: The touch panel sends operation information 72 to an application 2.

Exemplarily, after receiving the operation OP2, the touch panel may generate the corresponding operation information 72. Similar to the process of sending the operation information 71 to the application 1 after the operation OP1 is inputted, in this example, the touch panel may send the operation information 72 to the application 2 by using a touch driver and an IMS module.

Therefore, after a next Vsync signal arrives, the application 1 may normally deliver a rendering instruction, to instruct the electronic device to render a game picture. The application 2 may alternatively deliver a rendering instruction to instruct the electronic device to render and subsequently display the small window.

Exemplarily, the electronic device may implement processing such as rendering and synthesizing of the current game picture (for example, the image 4a) by using the following processing mechanism of S1303a to S1313a. The electronic device may further implement processing corresponding to a small window (for example, the image 4b) by using the following processing mechanisms S1303b to S1309b.

Detailed descriptions are separately provided below.

S1303a: An application 1 generates a rendering instruction 131. The rendering instruction 131 may alternatively be referred to as a third rendering instruction.

Exemplarily, the application 1 may generate a rendering instruction 131 for the image 4a after the signal V35 arrives.

S1304a: The application 1 delivers the rendering instruction 131 to a drawing module.

S1305a: The drawing module performs rendering processing based on the rendering instruction 131, to obtain a rendering result 133. The rendering result 133 may alternatively be referred to as a third rendering result.

S1306a: The drawing module sends the rendering result 133 to a buffer queue BQ1.

S1307a: A BufferTX module updates an identifier field 1.

S1308a: An SF module determines that the identifier field 1 in the BufferTX module is updated.

Exemplarily, for a processing mechanism of S1304a to S1308a, refer to S1004 to S1009 in FIG. 10. Refer to the specific implementations for mutual reference. This is not described herein again.

S1309a: The SF module determines that the application 1 corresponding to an available buffer is in an application white list.

In this example, the SF module may determine status of all currently available buffers based on identifier fields in the BufferTX module.

For example, the SF module may determine, based on that an identifier field configured as 1 only in the BufferTX module includes the identifier field 1 only, that the currently available buffer is included in the buffer queue BQ1 corresponding to the identifier field 1 only.

In this way, the SF module may determine, based on that the name of the buffer queue BQ1 includes application 1 and the package name of application 1 is included in the application white list, that an application corresponding to the current available buffer is in the application white list.

Therefore, the SF module may start an XSync solution for the currently available buffer. That is, the SF module may consume an existing Buffer in the buffer queue BQ1 without waiting for a next Vsync signal to arrive.

S1310a: The SF module obtains a rendering result 133 from the buffer queue BQ1.

S1311a: The SF module perform synthesis processing based on the rendering result 133.

S1312a: The SF module complete synthesis processing on the rendering result 133, to obtain a presentation image 92. In this example, with reference to the description in FIG. 11, in this example, the SF module may complete the synthesis processing of the rendering result 133 after the signal V36 arrives.

S1313a: The SF module transmits the presentation image 92 to a display module.

In this way, after the next Vsync signal arrives, the display may display the presentation image 92.

Therefore, the game picture corresponding to the image 4a can be quickly displayed.

As shown in FIG. 13A and FIG. 13B, the electronic device may further use the following S1303b to S1309b, to implement processing on the instructions related to the application 2.

S1303b: The application 2 generates a rendering instruction 132. The rendering instruction 132 may alternatively be referred to as a second rendering instruction.

Exemplarily, the application 2 may generate the rendering instruction 132 based on the operation information 72. The rendering instruction 132 may be used for instructing the electronic device to perform rendering processing on a small window interface. The small window interface may correspond to the image 4b in the foregoing example.

S1304b: The application 2 sends a rendering instruction 132 to a drawing module.

S1305b: The drawing module performs rendering processing based on the rendering instruction 132, to obtain a rendering result 134.

As shown in FIG. 13A and FIG. 13B, in this example, the application 1 and the application 2 may separately arrive based on the signal V35, and independently generate corresponding rendering instructions and deliver the rendering instructions. In this way, the drawing module may separately perform rendering processing corresponding to the application 1 and the application 2 by using different rendering threads.

It may be understood that in different rendering processing processes, due to the fact that rendering content indicated by the rendering instructions is different, corresponding time consumption is also different. For example, an occasion when the drawing module obtains the rendering result 133 may be earlier than an occasion when the drawing module obtains the rendering result 134.

In this way, the rendering result 133 may enter the buffer queue earlier than the rendering result 134. Therefore, the foregoing S1306a and process of subsequent processing may be triggered.

On the contrary, the drawing module may perform the step shown in S 1305b, and after obtaining the rendering result 134, continue processing based on the following steps.

S1306b: The drawing module sends the rendering result 134 to a buffer queue BQ2.

The buffer queue BQ2 may be a buffer queue configured for the application 2 in the memory of the electronic device. In this way, a new buffer of the rendering result 134 may be generated and enqueued.

S1307b: A BufferTX module updates an identifier field 2.

S1308b: The SF module determines that the identifier field 2 in the BufferTX module is updated.

S1309b: The SF module determines that the application 2 corresponding to an available buffer is not in an application white list.

It can be understood that, with reference to the processing in S1311a, after the rendering result 133 corresponding to S1311a is dequeued and synthesis processing is performed, the available buffer in the buffer queue BQ1 may be null.

Correspondingly, after S1311a, the BufferTX module may adjust the identifier field 1 corresponding to BQ1 to 0.

Therefore, after the processing of S1307b, and the BufferTX module updates the identifier field 2 (for example, adjusts the identifier field 2 to 1), the identifier field 1 is 0, and the identifier field 2 is 1. That is, the available buffer indicated by the current BufferTX module is a buffer corresponding to BQ2 corresponding to the identifier field 2.

In step S1309b, the SF module may determine, based on that the available buffer indicated by the BufferTX module for each identifier field is a buffer corresponding to BQ2, that the application 2 included in the name of BQ2 corresponding to the available buffer is not in the application white list. Therefore, the SF module may not enable the Xsync solution for the currently available buffer. That is, the SF module may wait for a next Vsync signal to arrive, and attempt to perform synthesis processing on the currently available buffer.

In this way, processing for the 4^{th} frame of image within a Vsync period from the signal V35 to the signal V36 may be completed.

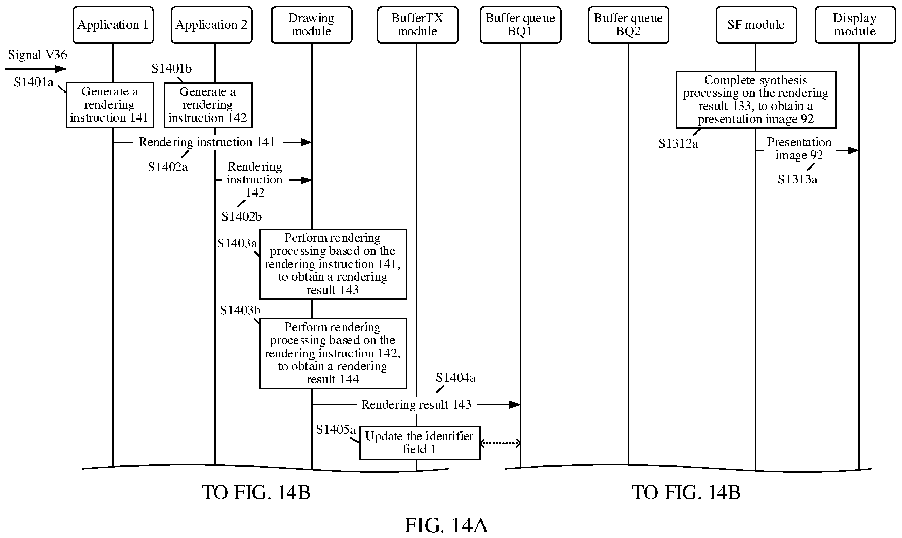

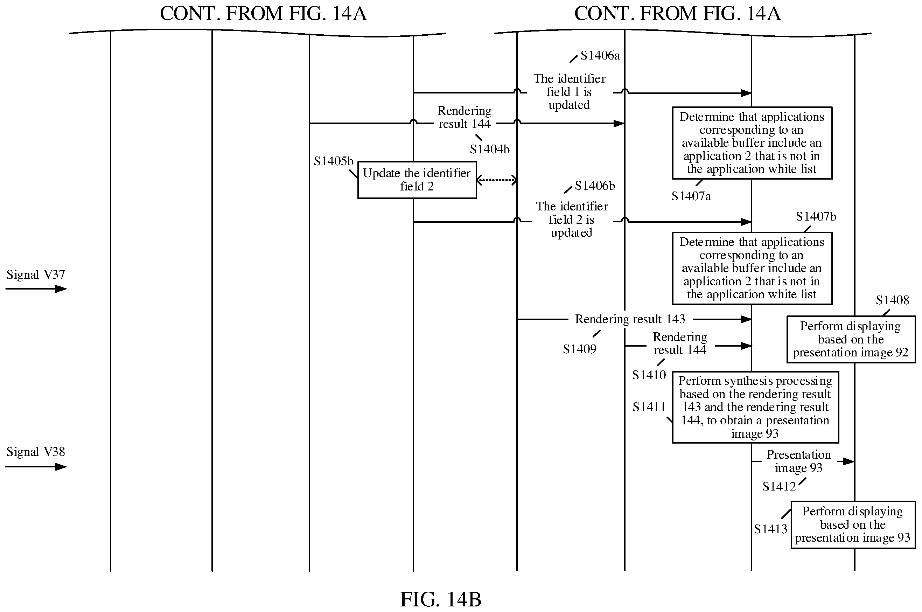

Then, the electronic device may continuously perform processing on the 4^{th} frame of image and the 5^{th} frame of image in a subsequent Vsync period as shown in FIG. 14A and FIG. 14B.

As shown in FIG. 14A and FIG. 14B, the method may include:
S1401a: An application 1 generates a rendering instruction 141.

With reference to the example in FIG. 11, after the signal V36 arrives, the application 1 may further generate a rendering instruction 141, thereby instructing the electronic device to perform processing such as rendering on the image 5a.

S1402a: The application 1 sends the rendering instruction 141 to a drawing module.

S1403a: The drawing module performs rendering processing based on the rendering instruction 141, to obtain a rendering result 143.

S1404a: The drawing module sends the rendering result 143 to a buffer queue BQ1.

S1405a: A BufferTX module updates an identifier field 1.

S1406a: The SF module detects that the identifier field 1 updates.

S1407a: The SF module determines that applications corresponding to an available buffer include an application 2 that is not in the application white list.

It may be understood that, with reference to the description in FIG. 13A and FIG. 13B, before the rendering result 143 corresponding to S1404a is dequeued, in the BufferTX module, due to the fact that the rendering result 133 is dequeued, the identifier field 1 is 0. The rendering result 134 is not listed before waiting for a next Vsync signal to arrive. Therefore, the identifier field 2 is 1.

In this way, after the rendering result 143 corresponding to S1404a is enqueued, the BufferTX module may include: an identifier field 1 being 1, and an identifier field 2 being 1.

The SF module may determine, based on S1406a, that a new buffer is enqueued, and further determine, based on a step corresponding to S1407a, whether to trigger the Xsync solution.

Exemplarily, the SF module may determine, based on an identifier field in the BufferTX module, that the currently available buffer may include one buffer in a buffer queue BQ1 and one buffer in a buffer queue BQ2.

The SF module may determine, based on the application 1 corresponding to the name of the buffer queue BQ1, that the buffer corresponding to the buffer queue BQ1 is a buffer generated by an application in the application white list.

The SF module may determine, based on the application 2 corresponding to the name of the buffer queue BQ2, that the buffer corresponding to the buffer queue BQ2 is not a buffer generated by an application in the application white list.

In this way, due to the fact that an application that exists in a non-application white list among currently available buffers is a buffer, the SF module may not trigger the XSync solution. Correspondingly, the SF module may wait for a next Vsync signal to arrive, and then consume the two generated buffers.

In addition, as shown in FIG. 13A and FIG. 13B, within a Vsync period from a signal V35 to a signal V36, the electronic device may further perform the following processing:

S1401b: An application 2 generates a rendering instruction 142. The rendering instruction 142 may be used for instructing to render the image 5b.

S1402b: The application 2 sends a rendering instruction 142 to a drawing module.

S1403b: The drawing module performs rendering processing based on the rendering instruction 142, to obtain a rendering result 144.

S1404b: The drawing module sends the rendering result 144 to a buffer queue BQ2.

S1405b: A BufferTX module updates an identifier field 2.

S1406b: An SF module detects that the identifier field 2 updates.

S1407b: The SF module determines that applications corresponding to the available buffer include the application 2 that is not in the application white list.

Therefore, by means of the solution implementations of S 1401b to S1407b, the electronic device can perform corresponding processing in response to the rendering instruction 142 of the application 2 within the Vsync period. For example, the drawing module may complete enqueuing of the corresponding rendering result 144 to the buffer queue BQ2.

In some embodiments of this application, an example in which one valid buffer is configured in the buffer queue BQ2 is used. In this way, there may be at most one available buffer in the buffer queue BQ2 at a same time. Due to the fact that there may be an unconsumed rendering result 134 in the buffer queue BQ2, after the rendering result 144 is enqueued, the rendering result 144 may cover the rendering result 134.

Correspondingly, after S1404b, the rendering result 144 may include the buffer queue BQ2.

Due to the fact that there is one produced buffer in the buffer queue BQ2, the identifier field 2 in the BufferTX module may be 1.

In this application, the SF module may perform determining of S1407a or S1407b each time the SF module detects that a new identifier field is updated, to determine whether to trigger the XSync solution.

In S 1407b, the SF module may determine that the currently available buffers include a buffer generated by the application 2, and the application 2 is not included in the application white list. Therefore, the SF module does not trigger the XSync solution.

Then, after a next Vsync signal (for example, the signal V37) arrives, an ebook may perform S1408 to S1412.

S1408: The display module performs displaying based on a presentation image 92.

Therefore, a 4^{th} frame of image corresponding to the presentation image 92 may be displayed on the display of the electronic device. The 4^{th} frame of image may correspond to a rendering result of the image 4a shown in FIG. 11, that is, a game picture.

With reference to the description in S 1407b, due to the fact that all currently generated buffers cannot be dequeued for consumption, until a next Vsync signal arrives, after the signal V37 arrives, the solution may further include:

S1409: The SF module obtains a rendering result 143 from the buffer queue BQ1.

S1410: The SF module obtains a rendering result 144 from the buffer queue BQ2.

S1411: The SF module performs synthesis processing based on the rendering result 143 and the rendering result 144, to obtain a presentation image 93.

S1412: The SF module transmits the presentation image 93 to the display module.

In this way, the presentation image 93 may include picture content that the application 1 and the application 2 instruct the electronic device to render after the signal V36 arrives. For example, the presentation image 93 may include an image 5a (for example, a game picture) and an image 5b (for example, a small window picture).

Therefore, as shown in S 1413, after a next Vsync signal (for example, the signal V38) arrives, the display module may perform displaying based on the presentation image 93. In this way, a complete 5^{th} frame of image can be displayed on the display.

It should be noted that, in some other embodiments of this application, the electronic device may further be configured with a switch button for enabling the Xsync solution. The Xsync solution may be generally controlled to take effect through the switch button of the Xsync solution.

Exemplarily, when a switch button of the Xsync solution is in an on state, the electronic device (for example, the SF module in the electronic device) may determine, based on the solution provided in FIG. 10, FIG. 13A and FIG. 13B, or FIG. 14A and FIG. 14B, whether the currently available buffer performs quick synthesis processing by using the Xsync solution. Correspondingly, when the switch button of the Xsync solution is in an off state, the electronic device (for example, the SF module in the electronic device) may trigger, based on native logic and based on arrival of a next Vsync signal, dequeuing and synthesis of an existing buffer.

In some embodiments, the switch button of the Xsync solution may be manually turned on or off by a user. In some other embodiments, the switch button of the Xsync solution may be turned on or off by the electronic device.

It may be understood that, to implement the functions, the electronic device provided in the embodiments of this application includes corresponding hardware structure and/or software modules for executing the functions. A person skilled in the art should be easily aware that, in combination with units and algorithm steps of the examples described in embodiments disclosed in this specification, the embodiments of this application can be implemented by hardware or a combination of hardware and computer software. Whether some function is performed in a mode of hardware or of computer software driving hardware depends on a specific application and design constraints of the technical solution. A person skilled in the art may use different methods to implement the described functions for each particular application, but it shall not be considered that the implementation goes beyond the scope of the embodiments of this application.

In the embodiments of this application, functional modules of the electronic device may be divided based on the foregoing method example. For example, each functional module may be divided based on each function, or two or more functions may be integrated into one processing module. The integrated module may be implemented in the form of hardware, or may be implemented in a form of a software functional module. It should be noted that, module division in the embodiments of this application is an example, and is merely logical function division. During actual implementation, there may be another division manner.

In the foregoing example, the solution provided in the embodiments of this application is exemplarily described from the perspective of the functional modules. A person skilled in the art should be easily aware that, in combination with units and algorithm steps of the examples described in embodiments disclosed in this specification, this application can be implemented by hardware or a combination of hardware and computer software. Whether some function is performed in a mode of hardware or of computer software driving hardware depends on a specific application and design constraints of the technical solution. A person skilled in the art may use different methods to implement the described functions for each particular application, but it shall not be considered that the implementation goes beyond the scope of the embodiments of this application.

The integrated module may be implemented in the form of hardware, or may be implemented in a form of a software functional module. It should be noted that, module division in the embodiments of this application is an example, and is merely logical function division. During actual implementation, there may be another division manner.

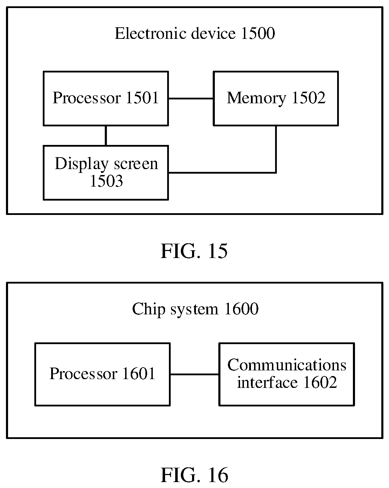

Exemplarily, FIG. 15 is a schematic diagram of composition of an electronic device 1500. As shown in FIG. 15, the electronic device 1500 includes a processor 1501 and a memory 1502. In this example, the electronic device 1500 may further include a display 1503. The memory 1502 is configured to store computer-executable instructions. Exemplarily, in some embodiments, when the processor 1501 executes the instructions stored in the memory 1502, the electronic device 1500 may be caused to perform the method shown in any one of the foregoing embodiments, so that a related image can be displayed on the display 1503 more quickly.

It should be noted that, all related content of the steps related to foregoing method embodiments may be quoted to the functional descriptions of the corresponding functional modules. Details are not described herein again.

FIG. 16 is a schematic diagram of the composition of a chip system 1600. The chip system 1600 may include: a processor 1601 and a communications interface 1602, configured to support a related device to implement functions related to the foregoing embodiments. In possible design, the chip system further includes a memory, configured to store program instructions and data necessary to the electronic device. The chip system may include a chip, or may include a chip and another discrete component. It should be noted that in some implementations of this application, the communications interface 1602 may alternatively be referred to as an interface circuit.

It should be noted that, all related content of the steps related to foregoing method embodiments may be quoted to the functional descriptions of the corresponding functional modules. Details are not described herein again.

All or some of the functions or actions or operations in the foregoing embodiments may be implemented by means of software, hardware, firmware, or any combination thereof. When a software program is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

Although this application is described with reference to specific features and embodiments, it is clear that various modifications and combinations may be made to this application without departing from the spirit and scope of this application. Correspondingly, this specification and the accompanying drawings are merely example description of this application defined by the appended claims and are considered to cover any and all modifications, variations, combinations, or equivalents in the scope of this application. Obviously, a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. An image processing method, applied to an electronic device, wherein the electronic device is equipped with a display, and a first application is further installed in the electronic device;
the method comprises:
receiving, after a first synchronization Vsync signal is generated, a first rendering instruction delivered by the first application, the first rendering instruction being used for instructing the electronic device to perform rendering processing on an N^{th} frame of image;
obtaining a first rendering result based on the first rendering instruction;
performing synthesis processing based on the first rendering result, to obtain a first presentation image, the first presentation image being corresponding to the N^{th} frame of image; and
controlling, after a second Vsync signal is generated, the display to display the N^{th} frame of image based on the first presentation image,
wherein the second Vsync signal is generated after the first Vsync signal; and no generated Vsync signals exist after the first rendering result is obtained and before the synthesis processing is performed based on the first rendering result.

2. The method according to claim 1, wherein before the first Vsync signal is generated, the method further comprises:
receiving a first operation, the first operation being an operation on a first interface, and the first interface being a display interface of the first application.

3. The method according to claim 2, wherein the method further comprises:
generating first operation information based on the first operation, the first operation information indicating an operation type of the first operation and location information of the first operation; and
sending the first operation information to the first application;
the first operation information being corresponding to the first rendering instruction.

4. The method according to any one of claims 1 to 3, wherein the electronic device is configured with a first buffer queue, and the first buffer queue corresponds to the first application;
after the obtaining a first rendering result based on the first rendering instruction, the method further comprises:
storing first information corresponding to the first rendering result in the first buffer queue,
the first information comprising at least one of:
image information of the first rendering result; an identifier of a buffer storing the first rendering result; and a first file identifier, the first file identifier indicating a storage location of the first rendering result in a memory of the electronic device.

5. The method according to claim 4, wherein after the storing first information corresponding to the first rendering result in the first buffer queue, the method further comprises:
configuring a first identifier field corresponding to the first buffer queue as a second value, the first identifier field being the second value indicative of that new information is enqueued in the first buffer queue.

6. The method according to claim 5, wherein before the storing first information corresponding to the first rendering result in the first buffer queue, the first identifier field is configured as a first value, the first identifier field being the first value indicative of that available information in the first buffer queue is null.

7. The method according to claim 5 or 6, wherein the performing synthesis processing based on the first rendering result, to obtain a first presentation image further comprises:
obtaining the first information from the first buffer queue; and
performing the synthesis processing on the first rendering result indicated by the first information, to obtain the first presentation image.

8. The method according to claim 7, wherein an application white list is configured in the electronic device, the application white list comprises at least one piece of application information, and application information of different applications is different; and
after the obtaining the first information from the first buffer queue, the method further comprises:
determining that application information corresponding to all buffer queues whose identifier fields are the second value is comprised in the application white list.

9. The method according to claim 8, wherein the determining that application information corresponding to all buffer queues whose identifier fields are the second value is comprised in the application white list comprises:
determining that application information corresponding to the first buffer queue is comprised in the application white list.

10. The method according to claim 9, wherein
the application information comprises a package name of an application;
the application information corresponding to the first buffer queue comprises a package name of the first application corresponding to the first buffer queue; and
the determining that information of the first buffer queue is comprised in the application white list comprises:
determining that the package name of the first application corresponding to the first buffer queue is comprised in the application white list.

11. The method according to claim 10, wherein the method further comprises:
determining, based on a name of the first buffer queue, the package name of the first application corresponding to the first buffer queue.

12. The method according to any one of claims 8 to 11, wherein a second application is further installed in the electronic device; and
the method further comprises:
receiving, after a third Vsync signal is generated, a second rendering instruction delivered by the second application, the second rendering instruction being used for instructing the electronic device to perform rendering processing on at least a part of an M^{th} frame of image;
obtaining a second rendering result based on the second rendering instruction;
performing, after a fourth Vsync signal is generated, synthesis processing based on the second rendering result, to obtain a second presentation image, the second presentation image being corresponding to the M^{th} frame of image; and
controlling, after a fifth Vsync signal is generated, the display to display the M^{th} frame of image based on the second presentation image,
wherein the fourth Vsync signal is generated after the second rendering result is obtained.

13. The method according to claim 12, wherein after the obtaining a second rendering result based on the second rendering instruction, the method further comprises:
determining that application information of the second application is not comprised in the application white list.

14. The method according to claim 12 or 13, wherein after obtaining a second rendering result, the method further comprises:
storing second information of the second rendering result to a second buffer queue, the second buffer queue being a buffer queue corresponding to the second application.

15. The method according to claim 14, wherein the method further comprises:
receiving, after a third Vsync signal is generated, a third rendering instruction delivered by the first application, the third rendering instruction being used for instructing the electronic device to perform rendering processing on at least a part of the M^{th} frame of image;
obtaining a third rendering result based on the third rendering instruction; and
storing third information of the third rendering result to the first buffer queue,
wherein the third rendering result is obtained before the fourth Vsync signal is generated.

16. The method according to claim 15, wherein after a fourth Vsync signal is generated, the performing synthesis processing based on the second rendering result, to obtain a second presentation image comprises:
obtaining, after the fourth Vsync signal is generated, the third rendering result based on the third information of the first buffer queue; obtaining the second rendering result based on the second information of the second buffer queue; and
performing the synthesis processing on the second rendering result and the third rendering result, to obtain the second presentation image.

17. The method according to claim 15 or 16, wherein after the storing third information of the third rendering result to the first buffer queue, the method further comprises:
determining that application information corresponding to at least one buffer queue whose identifier field is the second value is not comprised in the application white list.

18. The method according to claim 17, wherein the determining that application information corresponding to at least one buffer queue whose identifier field is the second value is not comprised in the application white list comprises:
determining that the application information corresponding to the second buffer queue is not comprised in the application white list.

19. An electronic device, wherein the electronic device comprises: a memory and one or more processors, the memory being coupled to the processor,
wherein the memory is configured to store a computer program code, the computer program code comprises an computer instruction, and when the processor executes the computer instruction, the electronic device is caused to perform the method according to any one of claims 1 to 18.

20. A chip system, wherein the chip system is applied to an electronic device; the chip system comprises one or more interface circuits and one or more processors; the interface circuit and the processor are interconnected through a line, the interface circuit is configured to receive a signal from a memory of the electronic device and send the signal to the processor, and the signal comprises a computer instruction stored in the memory; and when the processor executes the computer instruction, the electronic device performs the method according to any one of claims 1 to 18.
